# EUROPEAN PATENT SPECIFICATION

(11) **EP 2 868 421 B1**
(45) Date of publication and mention of the grant of the patent: **24.05.2017**
(21) Application number: 14191146.1
(22) Date of filing: 30.10.2014
(51) Int. Cl.: B23K 26/00, B28D 5/00

(54) **Method of machining diamond using laser machining**
Verfahren zur Bearbeitung von Diamanten durch Laserimpulse
Procédé d'usinage de diamants par impulsions laser

(30) Priority: 04.11.2013 US 201361899662 P
(43) Date of publication of application: 06.05.2015
(73) Proprietor: Rofin-Sinar Technologies, Inc., Plymouth, MI 48170 (US)
(72) Inventor: Hosseini, S. Abbas, Orlando, FL Florida 32809 (US)
(74) Representative: Puschmann Borchert Bardehle Patentanwälte Partnerschaft mbB

(56) References cited:
- EP-A2- 2 837 462
- WO-A2-2009/114375
- WO-A2-2010/111089
- WO-A2-2012/006736
- JP-A- 2009 066 627
- US-A1- 2004 248 503
- US-A1- 2007 051 706
- US-A1- 2013 183 837

## Description

The present invention relates to a method of machining diamonds by using laser pulse according to the preamble of claim 1. There is a huge demand for drilling, and cutting in a transparent substrate such as a diamond. One application is for cleaving the many facets of diamond intended for use as a piece of jewellery, such as a ring. These commonly require multiple, precisely placed facets be cut about the periphery of the diamond's volume. One mistake in the cutting of a diamond renders its aesthetic value worthless for jewellery, leaving it then only adaptable for use in industrial applications.

Another potential market for the present invention is the cutting of sharp tips onto abrasive diamonds or cubic zirconia intended for mounting onto abrasive tool bits/blades. Because of the size of the scales involved with abrasive tool diamonds, and the existing prior art technologies, heretofore it has not been possible to "sharpen" these minute materials.

Diamond cutting is viewed from an economic perspective. Diamond investments are dependent on how a diamond will be cut. This requires substantial planning as to how to cut the diamond so as to eliminate flaws or inclusions, yet still maintain the greatest volume of the diamond intact. Scanning devices are used to get the rough shape of the stone reduced to a 3-dimensional computer model and the inclusions are photographed and placed on this 3D model, which is then used to find an optimal way to cut the stone considering the standard geometric configurations that have proven attractive to consumers and stone setters as well as the particular shape to which the crystal shape lends itself. It is preferable to get two stones cut from a single crystal hence the use of the round brilliant cut and square brilliant cuts. Sawing and cleaving by diamond saw or laser are the most common used techniques to cut a diamond.

With the prior art techniques, the cutting and polishing of a diamond crystal always results in approximately a 50% loss of crystal mass. Because the per-carat price of a diamond is driven by size (such as 1.00 carat), there is always a compromise between cut quality and carat weight.

Following the cutting, the rough surfaces of the diamond must be polished. The rougher the cut, the longer it takes to polish the stone and the less optical reflection and refraction that is encountered.

Currently, the prior art material processing systems produce a high percentage of waste (which translates to financial loss) by diamond drilling, or laser exposure techniques such as: ablative machining; combined laser heating and cooling; and high speed laser scribing. All of the prior art systems have disadvantages such as low throughput times, poor performance with many of the new exotic substrate materials, problems with the opacity of multiple level substrate stacks, cannot attain the close orifice spacing sought, propagate cracks in the material or leave an unacceptable surface roughness (ejecta) on the orifice sides and surface surrounding the point of initiation, form orifices that taper inward with increasing orifice depth, and large regions of collateral thermal damage (i.e. heat affected zones). In current manufacturing, the singulation, treatment of wafers or glass panels to develop orifices typically relies on diamond cutting routing or drilling. Henceforth, a fast, economical system for cleaving the facets of a diamond that avoids the waste and drawbacks of existing prior art systems would fulfill a long felt need in the transparent materials processing industry.

WO 2012/006736 A1 discloses a method according to the preamble of claim 1 for the internal processing of a transparent substrate in preparation for a cleaving step. The substrate is irradiated with a focused laser beam that is comprised of pulses having an energy and pulse duration selected to produce a filament within the substrate. The substrate is translated relative to the laser beam to irradiate the substrate and produce an additional filament at one or more additional locations. The resulting filaments form an array defining an internally scribed path for cleaving said substrate. Laser beam parameters may be varied to adjust the filament length and position, and to optionally introduce V-channels or grooves, rendering bevels to the laser-cleaved edges.

The general purpose of the present invention, which will be described subsequently in greater detail, is to provide a method for efficiently machining diamond, in particular cutting the facets of a diamond.

For this purpose, the method of machining diamond has the features of claim 1. Preferred embodiments of the method are characterized in the sub-claims.

The method according to the invention accomplishes drilling through or stopped orifices in the diamond (or other transparent material) by using a material machining technique involving filamentation by bursts of ultrafast laser pulses with specific adjustments of the laser parameters in conjunction with distributed focus lens assembly that creates a plurality of different foci wherein the principal focal waist never resides in or on the surface of the target; so as to create a filament in the material that develops an orifice in any or each member of a stacked array of the material wherein the orifice has a specified depth and width at a desired point of initiation and point of termination within the desired wafer, plate or substrate. While the present disclosure focuses primarily on the drilling of orifices it is understood that the system and method described herein are equally applicable to the machining processes of drilling, dicing, cutting and scribing targets as continued movement of laser beam responsible for the orifice drilling filament formed within the diamond with respect to the diamond results in cutting/slicing of the diamond. Such cutting may be in nonlinear configurations, and as such the cuts are not restricted to planar facets as the present technology dictates.

This method for machining diamonds produces less waste and allows for more intricate cuts than can be accomplished by the prior art. More particularly it allows for machining orifices or cuts in any or each member of a stacked array of materials by a novel method using interference of burst of ultrafast laser pulses wherein the laser light and focusing parameters have been adjusted to create a filament inside the material that can create an orifice of specified depth and width at the desired point of initiation and point of termination.

A novel and unique technique to create nanometer to micrometer scale width cuts in and through transparent material such as diamonds, Si wafers, glass or Sapphire is disclosed. It has many of the advantages mentioned heretofore and many novel features that result in a new method of cutting facets on a diamond which is not anticipated, rendered obvious, suggested, or even implied by any of the prior art, either alone or in any combination thereof. Specifically, it offers the following huge advances over the prior art: smoother cut faces, minimal micro-crack propagation, longer/deeper orifice creation, non-tapered orifices, nonlinear absorption, orifices with a consistent internal diameter, minimized entrance distortion and reduced collateral damage.

Further advantages, features and potential applications of the present invention may be gathered from the description which follows, in conjunction with the embodiments illustrated in the drawings.

Throughout the description, the claims and the drawings, those terms and associated reference signs will be used as are notable from the enclosed list of reference signs. In the drawings is shown
- Fig. 1: a diagrammatic representation of a prior art ablative laser machining arrangement wherein the principal focus occurs at the top surface of the transparent substrate;
- Fig. 2: a perspective view of an orifice formed by the machining arrangement of Fig. 1;
- Fig. 3: a representative side view of a prior art ablative laser machining arrangement wherein the principal focus occurs below the top surface of the transparent substrate;
- Fig. 4: a perspective view of an orifice formed by the laser machining arrangement of Fig. 3;
- Fig. 5: a representative side view of an orifice ablatively machined as the laser arrangement of Fig. 1 wherein the primary focus occurs at the top surface of the transparent substrate;
- Fig. 6: a diagrammatic representation of the laser machining arrangement of the present invention wherein the primary focus occurs above the top surface of the transparent substrate;
- Fig. 7: a perspective view of an orifice scribe in a transparent substrate formed by the laser machining arrangement of the present invention;
- Fig. 8: a representative side view of two orifices drilled by the laser arrangement of Fig. 6;
- Fig. 9: a diagrammatic representation of the prior art ablative laser drilling arrangement;
- Fig. 10: a diagrammatic representation of the present invention;
- Fig. 11: a diagrammatic view of the present invention utilizing a distributed focus lens arrangement;
- Fig. 12: a diagrammatic view of the present invention utilizing a distributed focus lens arrangement;
- Fig. 13: a diagrammatic view of the present invention utilizing a distributed focus lens arrangement and the distribution of focal waists where the principal focus is above the target;
- Fig. 14: a diagrammatic view of the present invention utilizing a distributed focus lens arrangement and the distribution of focal waists where the principal focus is below the target;
- Fig. 15: a diagrammatic view of the present invention of Fig. 13 wherein the orifice has been drilled;
- Fig. 16: a diagrammatic view of the present invention utilizing a distributed focus lens arrangement and the distribution of focal waists where the principal focus is below multiple targets;
- Fig. 17 to 19: three various configurations of the distribution of laser energy;
- Fig. 20: a diagrammatic representation of a laser machining system;
- Fig 21: a diagrammatic representation of the control and processing unit for the laser machining system of Fig. 20;
- Fig. 22 and 23: the X-Y scanner, using non-telecentric and telecentric lenses;
- Fig. 24: an alternative embodiment producing filaments that are angled relative to the workpiece material's surface;
- Fig. 25: the layout of an example laser system suitable for part singulation; and
- Fig. 26 (a-d): the angled cut out approach for making angled edges as shown in Fig. 26 (e);
- Fig. 27: a plane of cleavage accomplished by successively drilling orifices through the material, and
- Fig. 28: an angled cut through a gemstone.

There has thus been outlined, rather broadly, the more important features of the invention in order that the detailed description thereof that follows may be better understood and in order that the present contribution to the art may be better appreciated. There are, of course, additional features of the invention that will be described hereinafter and which will form the subject matter of the claims appended hereto.

Various embodiments and aspects of the disclosure will be described with reference to details discussed below. The following description and drawings are illustrative of the disclosure and are not to be construed as limiting the disclosure. Numerous specific details are described to provide a thorough understanding of various embodiments of the present disclosure. However, in certain instances, well-known or conventional details are not described in order to provide a concise discussion of embodiments of the present disclosure.

In this respect, before explaining at least one embodiment of the invention in detail, it is to be understood that the invention is not limited in its application to the details of construction and to the arrangements of the components set forth in the following description or illustrated in the drawings. The invention is capable of other embodiments and of being practiced and carried out in various ways. Also, it is to be understood that the phraseology and terminology employed herein are for the purpose of descriptions and should not be regarded as limiting.

The main objective of the present invention is to provide a method for the fast, precise, and economical non-ablative laser machining to cut facets, scribe or drill holes in diamonds by filamentation by a burst(s) of ultrafast laser pulses. The apparatus and methodology employed to cut facets and geometric shapes in diamonds will be detailed herein as the laser machining technology, the laser machining system, and the diamond cutting methodology.

Stopped or through orifices may be drilled beginning at any depth, or in any one of a set of stacked wafers, plates or substrates, primarily, but not limited to, transparent materials such that the structural characteristics of the orifice and surrounding material exceed that found in the prior art. Movement of the laser beam in relation to the target substrate offers machining in the form of substrate (target) slicing or cutting. This can be accomplished in any or each member of a stacked array of materials by a novel method using filamentation of burst of ultrafast laser pulses wherein the laser light and focusing parameters have been adjusted to create a filament inside the material that can create an orifice or cut through a specified depth of the transparent substrate.

Unless defined otherwise, all technical and scientific terms used herein are intended to have the same meaning as commonly understood to one of ordinary skill in the art. Unless otherwise indicated, such as through context, as used herein, the following terms are intended to have the following meanings:
As used herein, the term ablative drilling refers to a method of machining a target (generally by cutting or drilling of a substrate by the removal of material) surface by irradiating it with a laser beam. At low laser flux, the material is heated by the absorbed laser energy and evaporates or sublimates. At high laser flux, the material is typically converted to a plasma. Usually, laser ablation refers to removing material with a pulsed laser, but it is possible to ablate material with a continuous wave laser beam if the laser intensity is high enough. Ablative drilling or cutting techniques are characterized by the creation of a debris field, the presence of a liquid/molten phase at some point during the material removal process, and the creation of an ejecta mound at the entrance and or exit of the feature.

As used herein, the term "photoacoustic cutting" refers to a method of machining a target generally by cutting or drilling of a substrate from a solid by irradiating it with a lower pulse energy light beam than is used in ablative drilling or cutting techniques. Through the processes of optical absorption followed by thermoelastic expansion, broadband acoustic waves are generated within the irradiated material to form a pathway of compressed material about the beam propagation axis (common with the axis of the orifice) therein that is characterized by a smooth wall orifice, a minimized or eliminated ejecta and minimized microcrack formation in the material. This phenomena is also known as "photoacoustic compression".

As used herein the term "optical efficiency" relates to the ratio of the fluence at the principal focal waist to the total incident fluence at the clear aperture of the focusing element or assembly.

As used herein the term "diamond" specifies one of many of the members of the group of minerals known as gemstones. These can be industrial or jewelry grade stones and it is to be understood that the term "diamond" as used herein, can be replaced with sapphire, ruby, tanzanite, emerald, and any other of a host of metal oxide stones.

As used herein, the term "transparent" means a material that is at least partially transparent to an incident optical beam. More preferably, a transparent substrate is characterized by absorption depth that is sufficiently large to support the generation of an internal filament modified array by an incident beam according to embodiments described herein. A transparent material has an absorption spectrum and thickness such that at least a portion of the incident beam is transmitted in the linear absorption regime.

As used herein, the term "filament modified zone" refers to a filament region within a substrate characterized by a region of compression defined by the optical beam path.

As used herein, the phrases "burst", "burst mode", or "burst pulses" refer to a collection of laser pulses having a relative temporal spacing that is substantially smaller than the repetition period of the laser. It is to be understood that the temporal spacing between pulses within a burst may be constant or variable and that the amplitude of pulses within a burst may be variable, for example, for the purpose of creating optimized or pre-determined filament modified zones within the target material. In some embodiments, a burst of pulses may be formed with variations in the intensities or energies of the pulses making up the burst.

As used herein, the phrase "geometric focus" refers to the normal optical path along which light travels based on the curvature of the lens, with a beam waist located according to the simple lens equation common to optics. It is used to distinguish between the optical focus created by the position of the lenses and their relation to one another and the constriction events created by thermal distortion in the target materials providing, in effect, a quasi-Rayleigh length on the order of up to 15 mm, which is particularly uncommon and related to the inventive nature of this work.

As used herein, the term "substrate" means a transparent material target and may be selected from the group consisting of transparent ceramics, polymers, transparent conductors, wide bandgap glasses, crystals, crystalline quartz, diamonds (natural or man-made), sapphire, rare earth formulations, metal oxides for displays and amorphous oxides in polished or unpolished condition with or without coatings, and meant to cover any of the geometric configurations thereof such as but not limited to plates and wafers. The substrate may comprise two or more layers wherein a location of a beam focus of the focused laser beam is selected to generate filament arrays within at least one of the two or more layers. The multilayer substrate may comprise multi-layer flat panel display glass, such as a liquid crystal display (LCD), flat panel display (FPD), and organic light emitting display (OLED). The substrate may also be selected from the group consisting of autoglass, tubing, windows, biochips, optical sensors, planar lightwave circuits, optical fibers, drinking glass ware, art glass, silicon, 111-V semiconductors, microelectronic chips, memory chips, sensor chips, electro-optical lenses, flat displays, handheld computing devices requiring strong cover materials, light emitting diodes (LED), laser diodes (LD), and vertical cavity surface emitting laser (VCSEL). Targets or target materials are generally selected from substrates.

As used herein the "principal focal waist" refers to the most tightly focused and strongest focal intensity of the beam after final focusing (after passing through the final optical element assembly prior to light incidence upon the target). It may also be used interchangeably with the term "principal focus." The term "secondary focal waist" refers to any of the other foci in the distributed beam having a lesser intensity than the principal focal waist. It may also be used interchangeably with the term "secondary focus' or "secondary foci."

As used herein the term "filament" refers to any light beam traveling through a medium wherein the Kerr effect can be observed or measured.

As used herein, "laser filamentation" is the act of creating filaments in a material through the use of a laser.

As used herein the term "sacrificial layer" refers to a material that can be removeably applied to the target material.

As used herein the term "machining" or "modification" encompasses the processes of drilling orifices, cutting, scribing or dicing a surface or volume of a target or substrate.

As used herein the term "focal distribution" refers to spatiotemporal distribution of incident light rays passing through a lens assembly that, in its aggregate, is a positive lens. Generally, herein their subsequent convergence of spots of useful intensity as a function from the distance from the center of the focusing lens is discussed.

As used herein the terms "critical energy level," "threshold energy level" and 'minimum energy level" all refer to the least amount of energy that must be put into or onto a target to initiate the occurrence of a transient process in the target material such as but not limited to ablative machining, photoacoustic machining, and the Kerr effect.

As used herein the term "aberrative lens" refers to a focusing lens that is not a perfect lens wherein the lens curvature in the X plane does not equal the lens curvature in the Y plane so as to create a distributed focal pattern with incident light that passes through the lens. A positive abberrative lens is a focally converging lens and a negative abberrative lens is a focally diverging lens.

As used herein, the terms, "comprises" and "comprising" are to be construed as being inclusive and open ended, and not exclusive. Specifically, when used in the specification and claims, the terms, "comprises" and "comprising" and variations thereof mean the specified features, steps or components are included. These terms are not to be interpreted to exclude the presence of other features, steps or components.

As used herein, the term "exemplary" means "serving as an example, instance, or illustration," and should not be construed as preferred or advantageous over other configurations disclosed herein.

As used herein, the terms "about" and "approximately" are meant to cover variations that may exist in the upper and lower limits of the ranges of values, such as variations in properties, parameters, and dimensions.

The following methodology will provide fast, reliable and economical non-ablative laser machining technique to initiate orifices (stopped/blind or through orifices) in the target material that may be initiated below or above a single or multiple stacked target material (or on either side of a tube) by filamentation by a burst(s) of ultrafast laser pulses. The movement of the laser beam with respect to the target material will direct the filament to cut or slice the target.

Ultra short lasers offer high intensity to micromachine, to modify and to process surfaces cleanly by aggressively driving multi-photon, tunnel ionization, and electron-avalanche processes. The issue at hand is how to put enough energy in the transparent material of the target, less than that used in ablative drilling, but beyond the critical energy level to initiate and maintain photoacoustic compression so as to create a filament that modifies the index of refraction at the focal points in the material and does not encounter optical breakdown (as encountered by the prior art ablative drilling systems) such that continued refocusing of the laser beam in the target material can continue over long distances, enough so that even multiple stacked substrates can be drilled simultaneously with negligible taper over the drilled distance, a relatively smooth orifice wall and can initiate from above, below or within the target material. The filament formed by the fabrication unit's direction/steering can be used to drill orifices, cut, scribe or dice a surface or volume of a target.

Generally, in the prior art, laser ablation techniques that utilize a high energy pulsed laser beam that is focused to a single principal focus above, within or at a surface of the material, have been used to machine transparent materials. The main issue of the prior art is a slow speed process, facets with microcracks, and wide kerf width with debris on the surface. Additionally, the prior art processes result in cut walls which always have an angle and the cuts cannot be done sharply in the vertical direction.

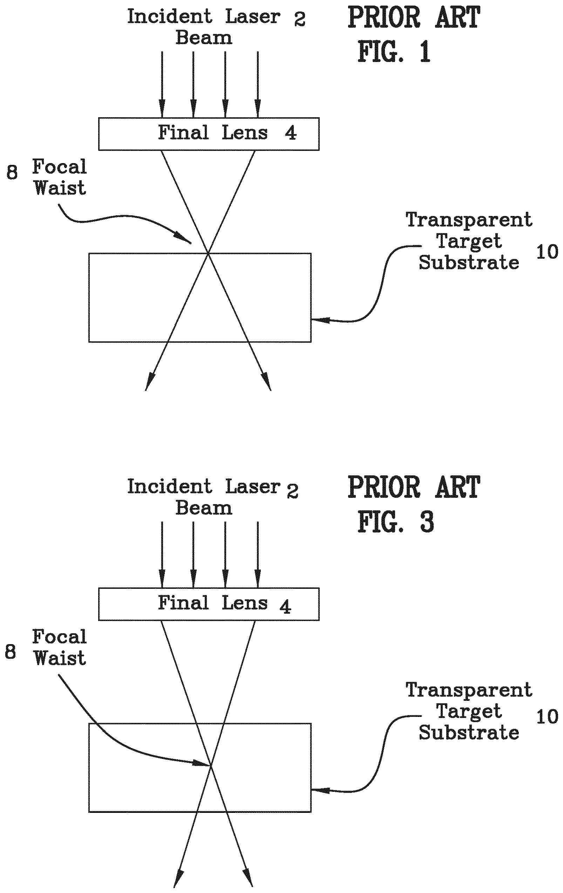

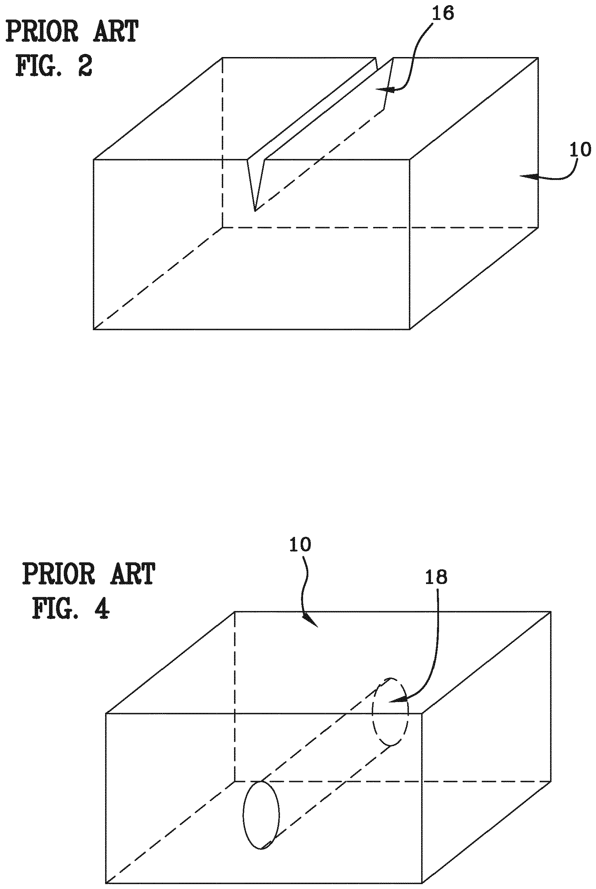

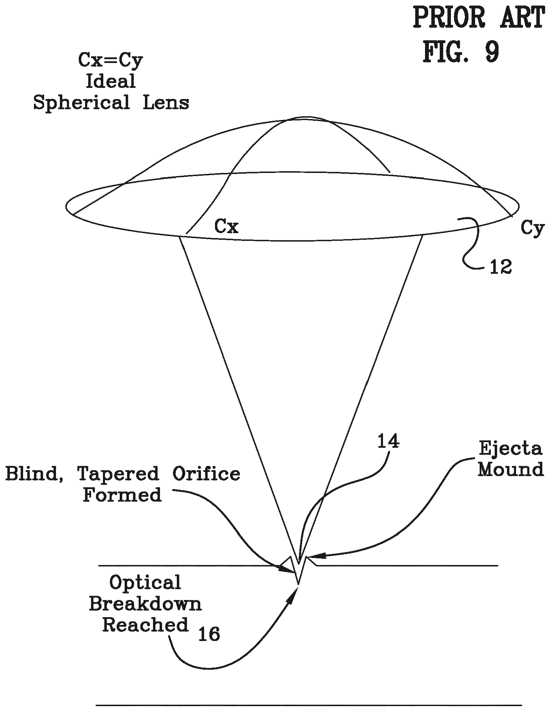

As shown in Fig. 1 the incident laser light beam 2 passes through a focusing assembly passing through a final focusing lens 4 so as to focus a non-distributed light beam 6 that has a focal waist 8 at the surface of the target 10. As can be seen in Fig. 3, optionally, the non-distributed light beam may be focused such that the focal waist resides within the target. Generally these techniques use a perfect spherical focusing lens 12, that is to say a lens that is non-aberrated that has curvature in the X plane that equals the curvature in the Y plane (Cx=Cy) or alternatively with a focusing element assembly that produces a non-distributed beam having a single focus 14 as shown in Fig. 9. This creates a tight beam spot that is then delivered on (Fig. 1) or in the target substrate material 10. See Fig. 3. Fig. 2 illustrates the geometry of a machined slot 16 cut with the technique of Fig. 1, and Fig. 4 illustrates the geometry of an oblong orifice 18 made with the technique of Fig. 3.

Propagation of intense ultrafast laser pulses in different optical media has been well studied. Nonlinear refractive index of a material is a function of laser intensity. Having an intense laser pulse with Gaussian profile, wherein the central part of the pulse has much higher intensity than the tails, means the refractive index varies for the central and surrounding areas of the material seeing the laser beam pulse. As a result, during propagation of such laser pulse, the pulse collapses automatically. This nonlinear phenomenon is known in science as self-focusing. Self-focusing can be promoted also using a lens in the beam path. In the focal region the laser beam intensity reaches a value that is sufficient to cause multiple-ionization, tunnel ionization and avalanche ionization, which creates plasma in the material. Plasma causes the laser beam to defocus and due to high peak intensity pulse refocus back to form the next plasma volume. The inherent problem with a single focus in a non-distributed beam is that the process ends after the laser pulses lose all their energy and are unable to refocus as discussed below.

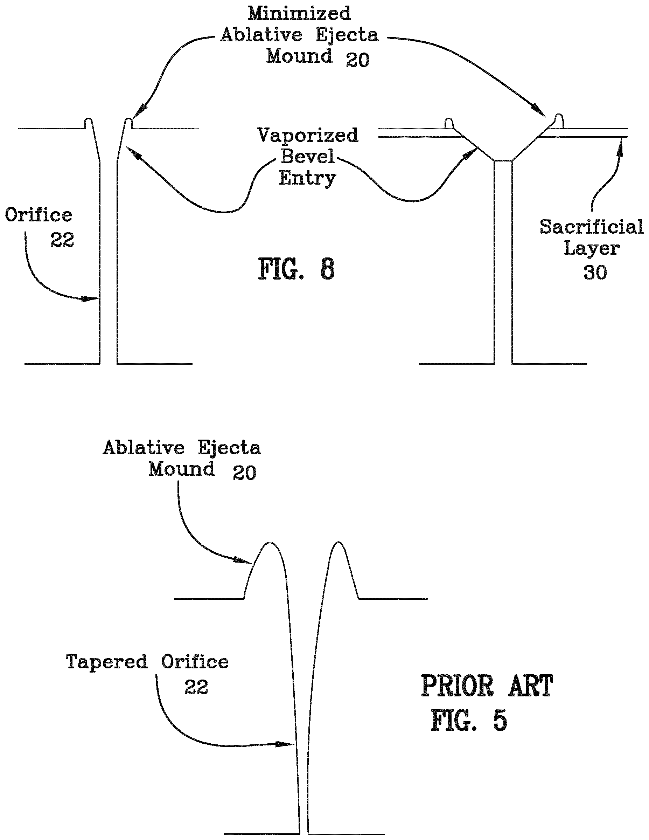

This ablative method develops a filament in the material 10 of a length of up to 30 microns until it exceeds the optical breakdown threshold for that material and optical breakdown (OB) 16 occurs. See Fig. 9. At OB the maximum threshold fluence (the energy delivered per unit area, in units of J/m²) is reached and the orifice diameter narrows and ablative machining or drilling ceases to proceed any deeper. This is the obvious drawback to using the prior art methods as they limit the size of the orifice that can be drilled, cause a rough orifice wall and result in an orifice with a taper 22 having a different diameter at the top and bottom surfaces of the target 10. See Fig. 5. This occurs because in ablative machining, the beam has central focus 8 (also referred to as a principal focal waist) at the surface of the target 10 causing localized heating and thermal expansion therein heating the surface of the material 10 to its boiling point and generating a keyhole. The keyhole leads to a sudden increase in optical absorptivity quickly deepening the orifice. As the orifice deepens and the material boils, vapor generated erodes the molten walls blowing ejecta 20 out and further enlarging the orifice 22. As this occurs, the ablated material applies a pulse of high pressure to the surface underneath it as it expands. The effect is similar to hitting the surface with a hammer and brittle materials are easily cracked. Additionally, brittle materials are particularly sensitive to thermal fracture which is a feature exploited in thermal stress cracking but not desired in orifice drilling. OB generally is reached when the debris is not ejected, a bubble is created in the orifice 22 or there is a violent ablation that cracks the target in the area of the orifice 22. Any one or combination of these effects causes the beam 6 to scatter from this point or be fully absorbed not leaving enough beam power (fluence) to drill down through the material 10 any further. Additionally, this creates a distortion or roughness known as the ablative ejecta mound 20 found around the initiating point at the surface of the target substrate 10. See Fig. 5.

Another problem with laser ablation techniques is that the orifices it drills are not of a uniform diameter as the laser beam filamentation changes its diameter as a function of distance. This is described as the Rayleigh range and is the distance along the propagation direction of a beam from the focal waist to the place where the area of the cross section is doubled. This results in a tapered orifice 22 as shown in Fig. 2 and 5.

The present invention solves the optical breakdown problem, minimizes the orifice roughness and the ablative ejecta mound, and eliminates the tapering diameter orifice.

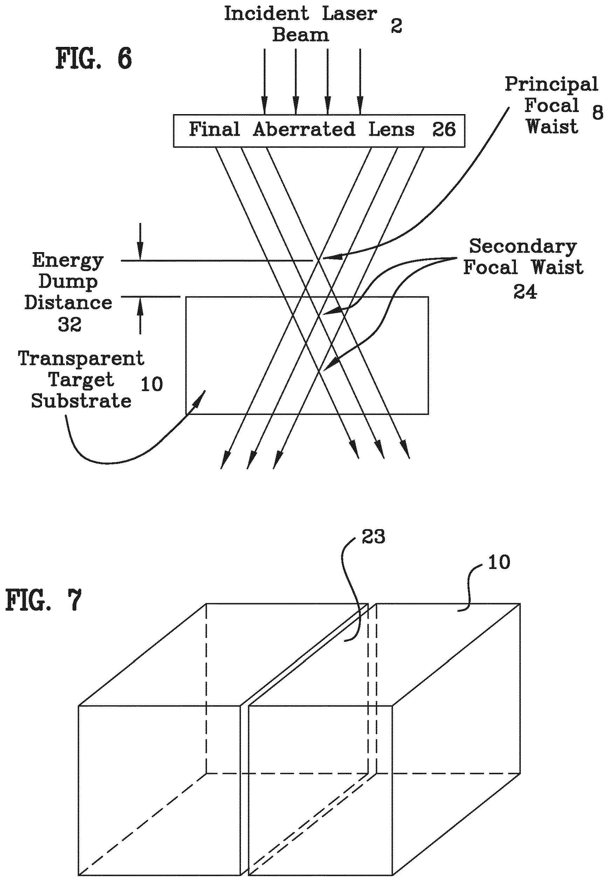

The present disclosure provides devices, systems and methods for the processing of orifices in transparent materials by laser induced photoacoustic compression. Unlike previously known methods of laser material machining, embodiments of the present invention utilize an optical configuration that focuses the incident beam 2 in a distributed manner along the longitudinal beam axis such that there is a linear alignment of the principal focus 8 and secondary foci 24 (coincident to the linear axis of the orifice but vertically displaced from the principal focus or focal waist) to allow the continual refocusing of the incident beam 2 as it travels through the material 10 thereby enabling the creation of a filament that modifies the index of refraction along the beam path in the material 10 and does not encounter optical breakdown (as seen in the prior art ablative drilling systems both with and without the use of rudimentary filamentation) such that continued refocusing of the laser beam in the target material can continue over long distances. See Fig. 6.

This distributed focusing method allows for the "dumping" or reduction of unnecessary energy from the incident beam 2 found at the principal focal waist 8 by the creation of secondary foci 24 by the distributed focusing elements assembly 26, and by positioning the location of the principal focal waist 8 from on or in the material, to outside the material 10. This dumping of beam fluence combined with the linear alignment of the principal focal waist 8 and secondary focal waists 24, enables the formation of filaments over distances well beyond those achieved to date using previously known methods (and well beyond 1 mm) while maintaining a sufficient laser intensity (fluence µJ /cm²) to accomplish actual modification and compression over the entire length of the filament zone. This distributed focusing method supports the formation of filaments with lengths well beyond one millimeter and yet maintaining an energy density beneath the optical breakdown threshold of the material with intensity enough so that even multiple stacked substrates can be drilled simultaneously across dissimilar materials (such as air or polymer gaps between layers of target material) with negligible taper over the drilled distance, (Fig. 7) and a relatively smooth walled orifice wall that can be initiated from above, below or within the target material. Propagating a non-tapered wall slit 23 in a target 10 is accomplished by the relative movement of the target 10 while machining an orifice.

The optical density of the laser pulse initiates a self focusing phenomena and generates a filament of sufficient intensity to non-ablative initial photoacoustic compression in a zone within/about/around the filament so as to create a linear symmetrical void of substantially constant diameter coincident with the filament, and also causes successive self focusing and defocusing of said laser pulse that coupled with the energy input by the secondary focal waists of the distributed beam forms a filament that directs/guides the formation of the orifice across or through the specified regions of the target material. The resultant orifice can be formed without removal of material from the target, but rather by a photoacoustic compression of the target material about the periphery of the orifice formed.

It is known that the fluence levels at the surface of the target 10 are a function of the incident beam intensity and the specific distributed focusing elements assembly, and are adjusted for the specific target material(s), target(s) thickness, desired speed of machining, total orifice depth and orifice diameter. Additionally, the depth of orifice drilled is dependent on the depth over which the laser energy is absorbed, and thus the amount of material removed by a single laser pulse, depends on the material's optical properties and the laser wavelength and pulse length. For this reason a wide range of process parameters are listed herein with each particular substrate and matching application requiring empirical determination for the optimal results with the system and materials used. As such, the entry point on the target 10 may undergo some minimal ablative ejecta mound formation 20 if the fluence levels at the surface are high enough to initiate momentary, localized ablative (vaporized) machining, although this plasma creation is not necessary. In certain circumstances it may be desirable to utilize a fluence level at the target surface that is intense enough to create the transient, momentary ablative drilling to give a broad bevelled entry yet have the remainder of the orifice 22 of uniform diameter Fig. 8 as would be created by a distributed focus hybrid drilling method using an energy level that permits a momentary ablative technique followed by a continual photoacoustic compression technique. This can be accomplished by the present invention by selection of a fluence level at the target surface that balances the linear absorption against the non linear absorption of the beam in the material such that the fluence level required for ablative machining will be exhausted at the desired depth of the bevelled (or other geometric configuration). This hybrid technique will result in a minor ejecta mound 20 that can be eliminated if a sacrificial layer 30 is applied to the target surface. Common sacrificial layers are resins or polymers such as but not limited to PVA, Methacrylate or PEG, and generally need only be in the range of 1 to 300 microns thick (although the 10 - 30 micron range would be utilized for transparent material machining) and are commonly applied by spraying the sacrificial layer onto the target material. The sacrificial layer will inhibit the formation of an ejecta mound on the target 10 by preventing molten debris from attaching itself to the surface, attaching instead to the removable sacrificial material as is well known in the art. See Fig. 8.

To accomplish photoacoustic compression machining requires the following system:
- A burst pulse laser system capable of generating a beam comprising a programmable train of pulses containing from 1 to 50 subpulses within the burst pulse envelope. Further, the laser system needs to be able to generate average power from 1 to 200 watts depending on the target material utilized and typically this range would be in the range of 50 to 100 watts for borosilicate glass.
- A distributed focusing element assembly (potentially comprising positive and negative lenses but having a positive focusing effect in the aggregate) capable of producing a weakly convergent, multi foci spatial beam profile where the incident fluence at the target material is sufficient to cause Kerr-effect self-focusing and propagation.
- An optical delivery system capable of delivering the beam to the target.

Commercial operation would also require translational capability of the material (or beam) relative to the optics (or vice versa) or coordinated/compound motion driven by a system control computer.

The use of this system to drill photoacoustic compression orifices requires the following conditions be manipulated for the specific target(s): the properties of the distributed focus element assembly; the burst pulsed laser beam characteristics; and the location of the principal focus.

The distributed focus element assembly 26 may be of a plethora of generally known focusing elements commonly employed in the art such as aspheric plates, telecentric lenses, non-telecentric lenses, aspheric lenses, axicon, annularly faceted lenses, custom ground aberrated (non-perfect) lenses, a combination of positive and negative lenses or a series of corrective plates (phase shift masking), any optical element tilted with respect to the incident beam, and actively compensated optical elements capable of manipulating beam propagation. The principal focal waist of a candidate optical element assembly as discussed above generally will not contain more than 90% nor less than 50% of incident beam fluence at the principal focal waist.

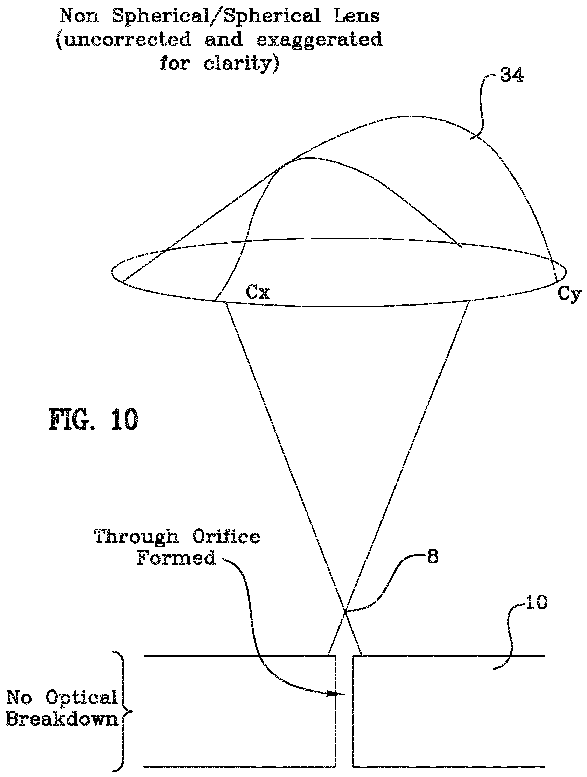

Although, in specific instances, the optical efficiency of the distributed focus element assembly 26 may approach 99%. Fig. 10 illustrates a non-aspherical, aberrated lens 34 as would be used in the aforementioned process. The actual optical efficiency of the distributed focus element assembly 26 will have to be fine-tuned for each specific application. The users will create a set of empirical tables tailored for each transparent material, the physical configuration and characteristics of the target as well as the specific laser parameters. Silicon Carbide, Gallium Phosphide, sapphire, strengthened glass etc. have their own values. This table is experimentally determined by creating a filament within the material (adjusting the parameters of laser power, repetition rate, focus position and lens characteristics as described above) and ensuring that there is sufficient fluence to induce a plane of cleavage or axis of photoacoustic compression to create an orifice.

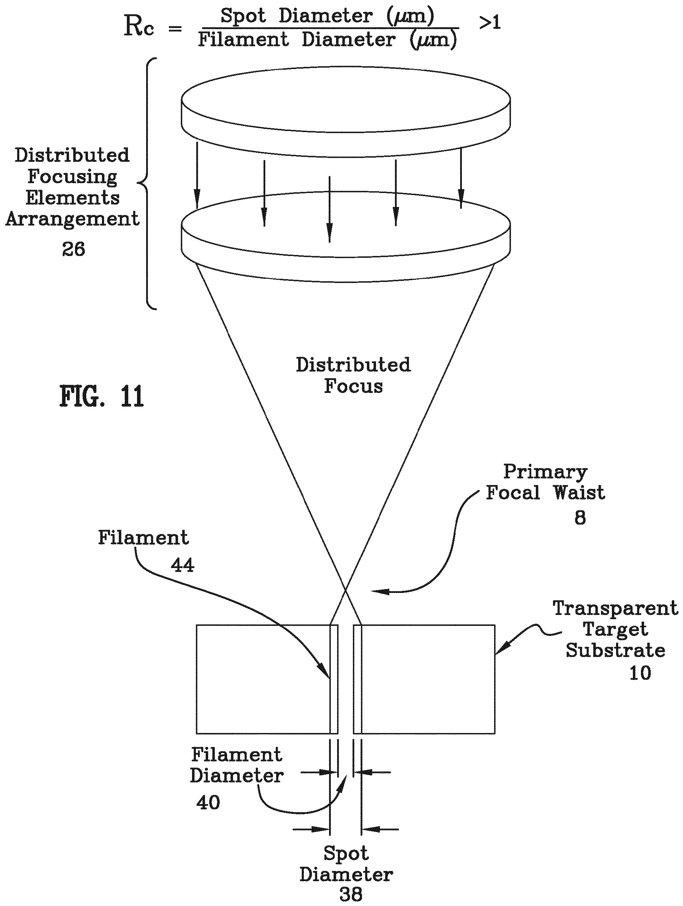

A sample optical efficiency for drilling a 1 micron diameter through orifice (as illustrated in Fig. 11) in a 2 mm thick single, planar target made of borosilicate, using a 50 Watt laser outputting 5 pulses (at 50 MHz) in each burst with 50 µJ energy having a frequency (repetition rate) that would lie in the 200 kHz range is 65% wherein the principal focal waist of the beam resides up to 500 µm off of the desired point of initiation.

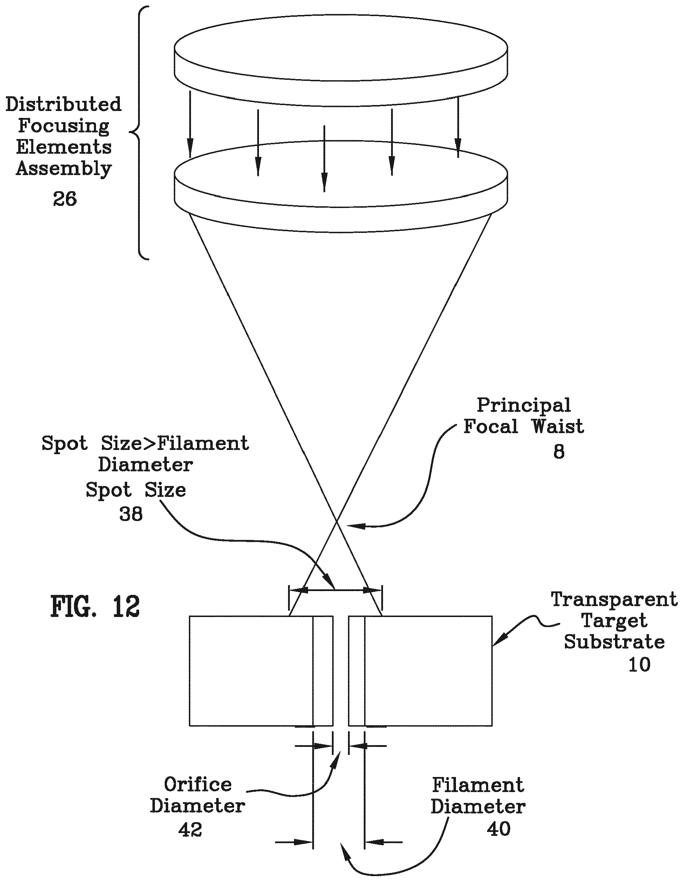

It is to be noted that there is also a set of physical parameters that must be met by this photoacoustic compression drilling process. Looking at Fig. 11 and 12 it can be seen that the beam spot diameter 38 > the filament diameter 40 > the orifice diameter 42. Additionally the distributed beam's primary focal waist 8 is never in or on the surface of the target material 10 into which a filament is created.

The location of the principal focal waist 8 is generally in the range of 5 to 500 µm off of the desired point of initiation. This is known as the energy dump distance 32 as illustrated in Fig. 6. It also is determined by the creation an empirical table tailored for each transparent material, the physical configuration and characteristics of the target as well as the laser parameters. It is extrapolated from the table created by the method noted above.

One example of the laser beam energy properties are as follows: a pulse energy in the beam between 5 µJ to 100 µJ at the repetition rate from 1 Hz to 2 MHz (the repetition rate defines the speed of sample movement and the spacing between neighboring filaments). The diameter and length of the filament may be adjusted by changing the temporal energy distribution present within each burst envelope.

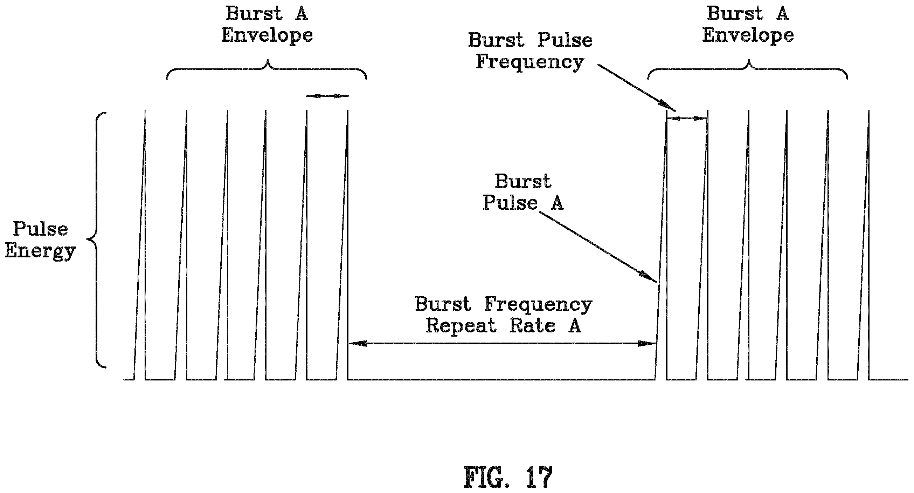

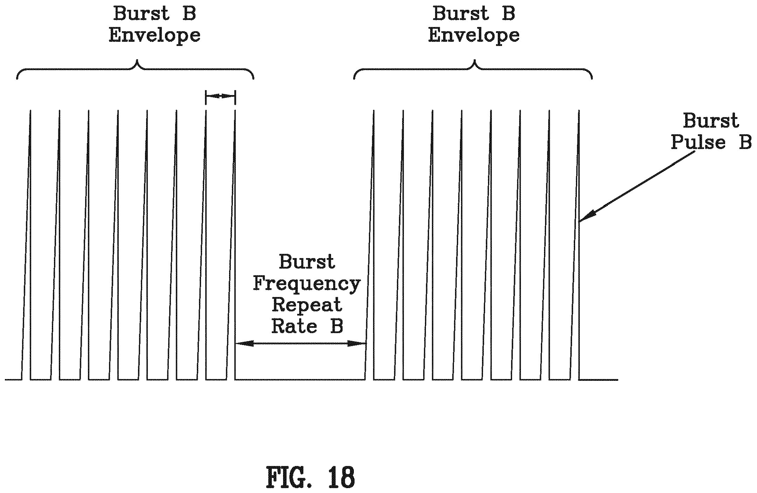

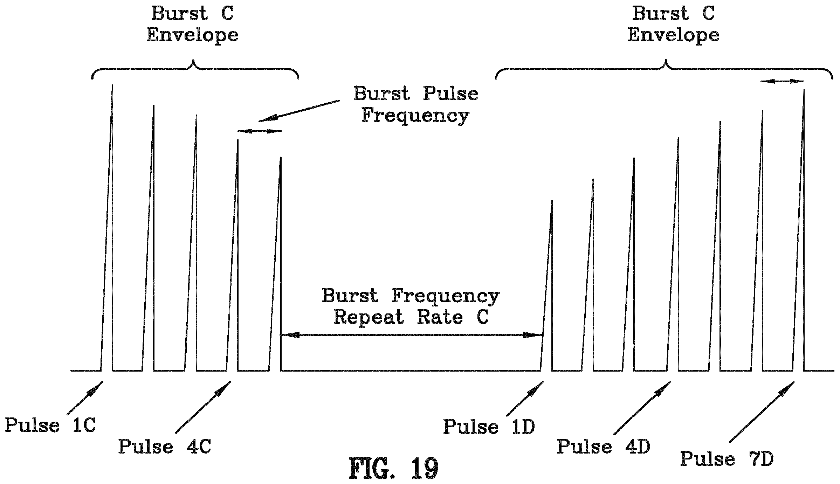

Fig. 17-19 illustrate examples of three different temporal energy distributions of a burst pulsed laser signal. The rising and falling burst envelope profiles of Fig. 19 represent a particularly useful means of process control especially well adapted for removing thin metal layers from dielectric materials.

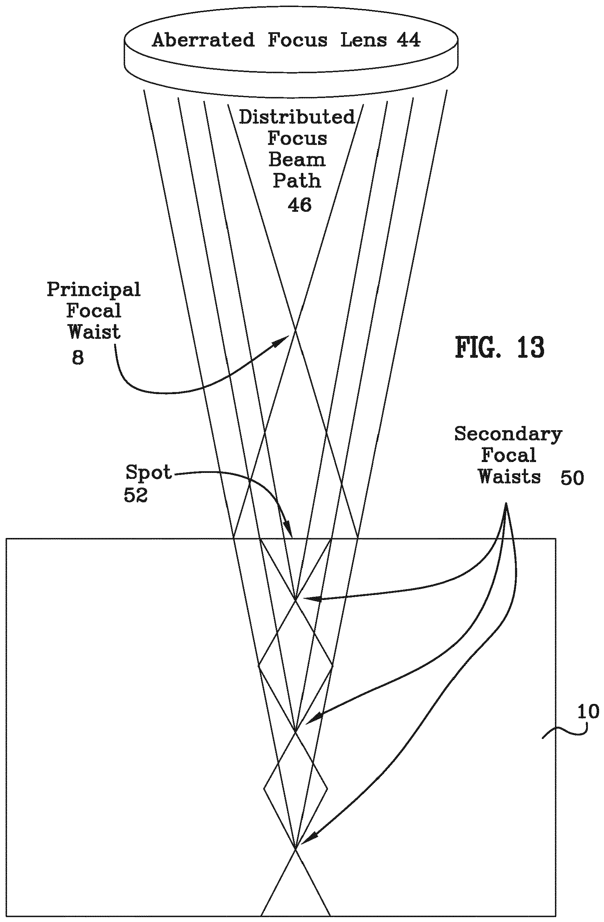

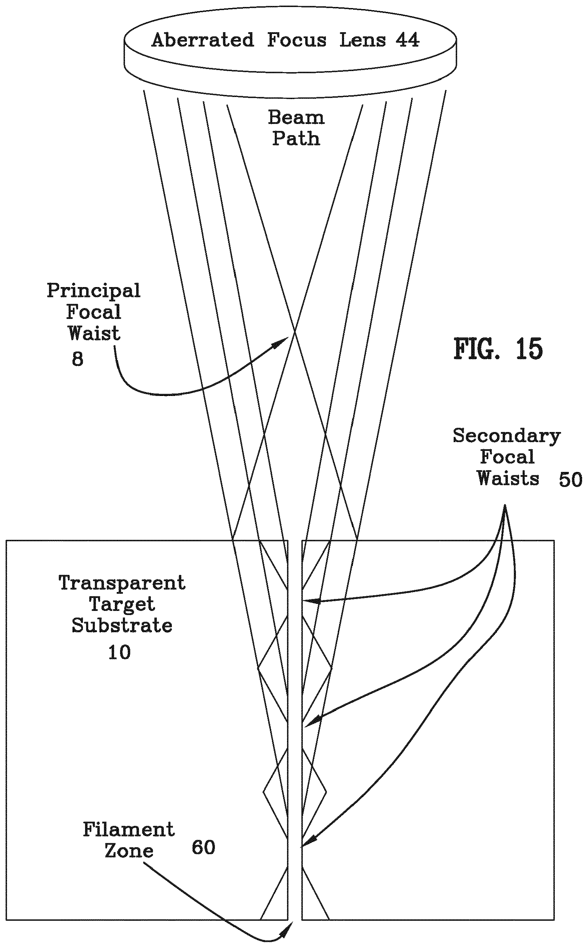

Looking at Fig. 13-16 collectively, the mechanism of the present invention can best be illustrated. Herein, burst picosecond pulsed light is used because the total amount of energy deposited in the target material is low and photoacoustic compression can proceed without cracking the material, and less heat is generated in the target material thus efficient smaller packets of energy are deposited in the material so that the material can be raised incrementally from the ground state to a maximally excited state without compromising the integrity of the material in the vicinity of the filament.

The actual physical process occurs as described herein. The principal focal waist of the incident light beam of the pulsed burst laser is delivered via a distributed focusing element assembly to a point in space above or below (but never within) the target material in which the filament is to be created. This will create on the target surface a spot as well as white light generation. The spot diameter on the target surface will exceed the filament diameter and the desired feature (orifice, slot, etc.) diameter. The amount of energy thus incident in the spot on surface being greater than the critical energy for producing the quadratic electro-optic effect (Kerr effect - where the change in the refractive index of the material is proportional to the applied electric field) but is lower that the critical energy required to induce ablative processes and more explicitly below the optical breakdown threshold of the material. Photoacoustic compression proceeds as a consequence of maintaining the required power in the target material over time scales such that balancing between the self-focusing condition and plasma defocusing condition can be maintained. This photoacoustic compression is the result of a uniform and high power filament formation and propagation process whereby material is rearranged in favor of removal via ablative processes. The extraordinarily long filament thus produced is fomented by the presence of spatially extended secondary foci created by the distributed focusing element assembly, maintaining the self focusing effect without reaching optical breakdown. In this assembly, a large number of marginal and paraxial rays converge at different spatial locations relative to the principal focus. These secondary foci exist and extend into infinite space but are only of useful intensity over a limited range that empirically corresponds to the thickness of the target. By focusing the energy of the second foci at a lower level below the substrate surface but at the active bottom face of the filament event, allows the laser energy access to the bulk of the material while avoiding absorption by plasma and scattering by debris.

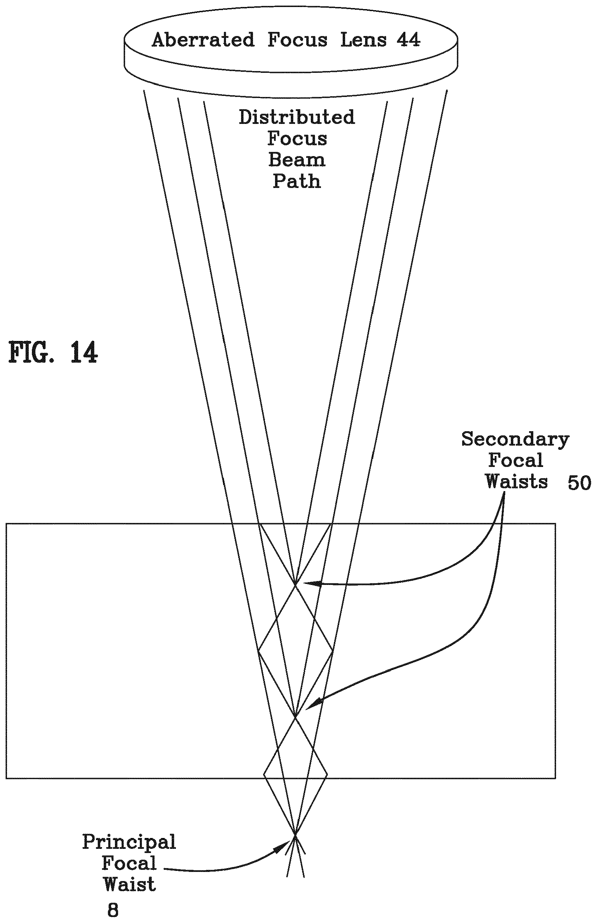

The distributed focal element assembly can be a single aberrated focal lens placed in the path of the incident laser beam to develop what appears to be an unevenly distributed focus of the incident beam into a distributed focus beam path containing a principal focal waist and a series of linearly arranged secondary focal waists (foci). The alignment of these foci is collinear with the linear axis of the orifice 42. Note that the principal focal waist 8 is never on or in the target material 10. In Fig. 13 the principal focal waist is above the target material and in Fig. 14 it is below the target material 10 as the orifice 42 may be initiated above or below the principal focal waist 8 by virtue of the symmetric and non-linear properties of the focused beam. Thus a beam spot 52 (approximately 10 µm distance) resides on the surface of the target 10 and the weaker secondary focal waists collinearly reside within the target because the material acts as the final optical element creating these focal points as the electric field of the laser alters the indices of refraction of the target. This distributed focus allows the amount of laser energy to be deposited in the material so as to form a filament line or zone 60. With multiple linear aligned foci and by allowing the material to act as the final lens, the target material when bombarded with ultrafast burst pulse laser beams, undergoes numerous, successive, localized heatings which thermally induced changes in the material's local refractive index (specifically, the complex index) along the path of the liner aligned foci causing a lengthy untapered filament 60 to be developed in the target followed by an acoustic compression wave that annularly compresses the material in the desired region creating a void and a ring of compressed material about the filamentation path. Then the beam refocuses and the refocused beam combined with the energy at the secondary focal waists maintains the critical energy level and this chain of events repeats itself so as to drill an orifice capable of 1500:1 aspect ratio (length of orifice/diameter of orifice) with little to no taper and an entrance orifice size and exit orifice size that are effectively the same diameter. This is unlike the prior art that focuses the energy on the top surface of or within the target material resulting in a short filamentation distance until the optical breakdown is reached and filamentation degrades or ceases.

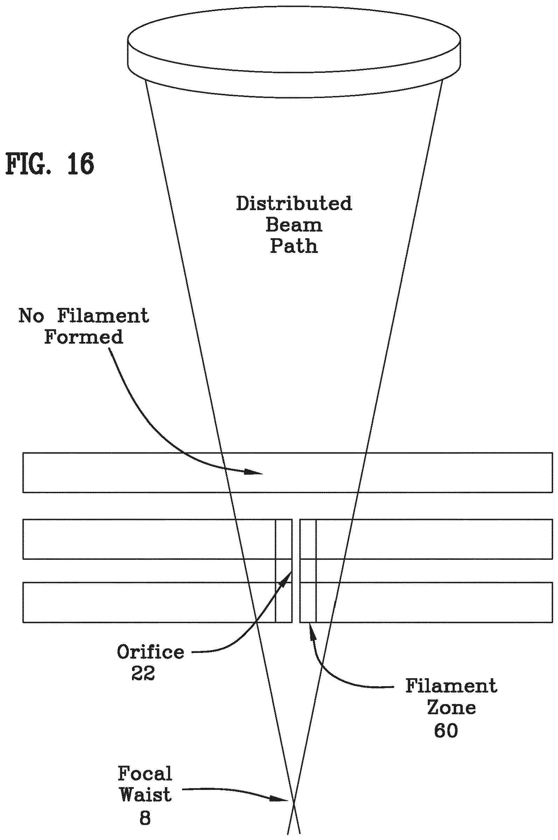

Fig. 16 illustrates the drilling of orifices in the bottom two of three planar targets 10 in a stacked configuration with an air gap between them wherein the principal focal waist 8 is positioned below the final target 10. The hole can be drilled from the top or the bottom or the middle of a multiple layer setup, but the drilling event always occurs the same distance from the principal focal waist if the same lens set and curvature is used. The focal waist is always outside of the material and never reaches the substrate surface.

The method of drilling orifices is through photoacoustic compression is accomplished by the following sequence of steps:
1. passing laser energy pulses from a laser source through a selected distributive-focus lens focusing assembly;
2. adjusting the relative distance and or angle of said distributive-focus lens focusing assembly in relation to a laser source so as to focus the laser energy pulses in a distributed focus configuration to create a principal focal waist and at least one secondary focal waist;
3. adjusting the principal focal waist or the target such that the principal focal waist will not reside on or in the target that is being machined;
4. adjusting the focus such that the spot of laser fluence on the surface of the target that is located below or above said principal focal waist, has a diameter that is always larger than a diameter of a filamentation that is formed in the target;
5. adjusting the fluence level of the secondary focal waists are of sufficient intensity and number to ensure propagation of a photoacoustic compressive machining through the desired volume of the target;
6. applying at least one burst of laser pulses of a suitable wavelength, suitable burst pulse repetition rate and suitable burst pulse energy from the laser source to the target through the selected distributive-focus lens focusing assembly, wherein the total amount of pulse energy or fluence, applied to the target at a spot where the laser pulse contacts the point of initiation of machining on the target, is greater that the critical energy level required to initiate and propagate photoacoustic compression machining, yet is lower than the threshold critical energy level required to initiate ablative machining; and
7. stopping the burst of laser pulses when the desired machining has been completed.

As mentioned earlier, there may be specific orifice configurations wherein a tapered entrance to the orifice may be desired. This is accomplished by initiation of the orifice with a laser fluence level that is capable of ablative machining for a desired distance and completing the drilling with a laser fluence level below the critical level for ablative machining yet above the critical level for photoacoustic machining to the desired depth in that material. This type of orifice formation may also utilize the application of a removable sacrificial layer on the surface of the target. This would allow the formation of the ejecta mound onto the sacrificial layer such that the ejecta mound could be removed along with the sacrificial layer at a later time. Such an orifice drilled by a hybrid ablative and photoacoustic compression method of machining would be performed through the following steps, although the application of the sacrificial layer need be utilized and if utilized need not occur first:
1. applying a sacrificial layer to at least one surface of a target;
2. passing laser energy pulses from a laser source through a selected distributive-focus lens focusing assembly;
3. adjusting the relative distance and or angle of said distributive-focus lens focusing assembly in relation to a laser source so as to focus the laser energy pulses in a distributed focus configuration to create a principal focal waist and at least one secondary focal waist;
4. adjusting the principal focal waist or the target such that the principal focal waist will not reside on or in the target that is being machined;
5. adjusting the focus such that the spot of laser fluence on the surface of the target that is located below or above said principal focal waist;
6. adjusting the spot of laser fluence on the surface of the target such that it has a diameter that is always larger than a diameter of a filamentation that is to be formed in the target;
7. ensuring the fluence level of the secondary focal waists are of sufficient intensity and number to ensure propagation of a photoacoustic compressive machining through the desired volume of the target; and
8. applying at least one burst of laser pulses of a suitable wavelength, suitable burst pulse repetition rate and suitable burst pulse energy from the laser source to the target through the selected distributive-focus lens focusing assembly, wherein the total amount of pulse energy or fluence, applied to the target at a spot where the laser pulse contacts the point of initiation of machining on the target, is greater that the critical energy level required to initiate ablative machining to the desired depth and thereinafter the fluence energy at the bottom of the ablatively drilled orifice is greater than the critical energy level to initiate and propagate a filamentation and photoacoustic compression machining, yet is lower than the threshold critical energy level required to initiate ablative machining; and
9. stopping the burst of laser pulses and filamentation when the desired machining has been completed.

The various parameters of the laser properties, the location of the principal focal waist, and the final focusing lens arrangements as well as the characteristics of the orifice created are set forth in the following table. It is to be noted that they are represented in ranges as their values vary greatly with the type of the target material, its thickness and the size and location of the desired orifice. The following chart details the ranges of the various system variables used to accomplish the drilling of uniform orifices in any of a plethora of transparent materials.

| **Laser Properties** | |
|---|---|
| Wavelength | 5 microns or less |
| Pulse width | 10 nanoseconds or less |
| Freq (laser pulse repetition rate) | 1 Hz to 2 MegaHz |
| Average power | 200 - 1 watt |
| Number of sub pulses per burst | 1 to 50 |
| Sub pulse spacing | 1 nanosecond to 10 microsecond |
| Pulse energy | 5 micro Joules (µJ) to 500 micro Joules (µJ) (Average power/repetition rate) watts/1/sec |

| **Orifice Properties** | |
|---|---|
| Min Orifice Diameter | .5 microns |
| Max Orifice Diameter | 50 microns |
| Max Orifice Depth | 10 mm in borosilicate glass |
| Typical Aspect Ratio | 1500:1 |
| Max Aspect Ratio | 2500:1 |
| Aberrated lens ratio | where the Cx:Cy ratio of the lenses are (-5 to 4,000) |
| Orifice Sidewall Smoothness (Material Independent) | < 5 micron ave. roughness (e.g., Si, SiC, SiN, GaAs, GaN, InGaP) |
| Orifice Side Wall Taper (Material Independent) | Negligible across 10,000 micron depth |

| **Beam Properties** | |
|---|---|
| Focal Distribution | -5 to 4,000 |
| M2 | 1.00 - 5.00 |

As noted earlier the parameters above vary with the target. In the way of an operational example, to drill a 3 micron hole 2 mm deep in a transparent substrate the following apparatus and parameters would be used: a 1064 nm wavelength laser, 64 Watts average power, 100 kHz repetition rate, 80 µJ pulse energy, and, 8 subpulses at a frequency of 50 MHz within the burst envelope.

The pulse power assuming a pulse width of 10 picoseconds, for example, is 80µJ divided by 10 picoseconds, which yields 8 MW (MW= Mega Watts). Generally, 2 MW is the threshold power required for filamentation in diamond.

This would be focused with an aberrated lens delivering distributed foci over 2 mm of space (filament active zone is 2 mm long) focusing 5 to 500 µm above or below the surface of the diamond.

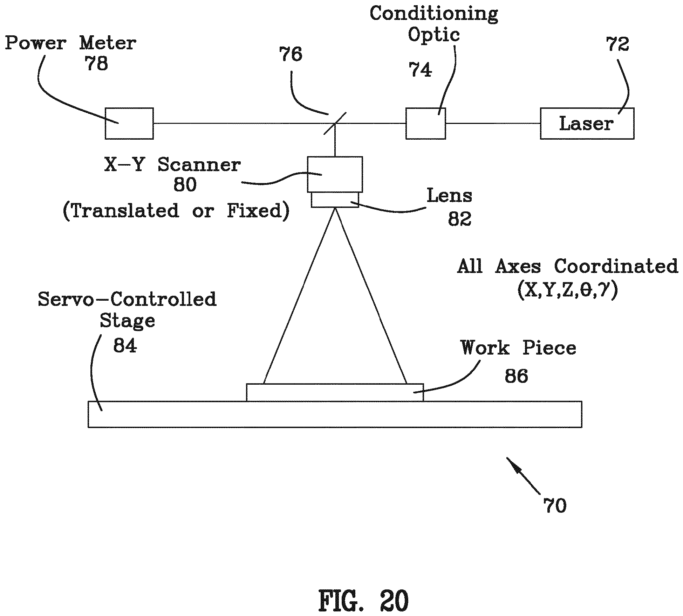

It is well known in the art that there are several types of laser machining systems currently available. All the laser machining systems have at least two things in common; they change the location of the incident laser beam on the work piece and they allow for the adjustment of the various laser focusing, power and delivery parameters. The system may move the work piece about the laser beam (for example, through a table translatable in the X-Y plane), may move the laser beam about the work piece (for example, through steering mirrors) or may utilize a combination of both techniques. Fig. 20 represents an example of a laser machining system 70 capable of forming filaments in the glass substrate of HDD platters or sheets. It includes an ultrafast laser 72 capable of supplying a train of burst-mode pulses, preferably with a pulse width less than 100 picoseconds, equipped with a suitable collection of beam steering optics, such that the laser beam can be delivered to a multi-axis rotation and translation stage including: a rotational stage in the XY plane (theta, θ), a 3D XYZ translational stage, and an axis for tipping the beam or the part relative to the X axis (gamma, γ) in a coordinated control architecture. In the example embodiment shown, the beam is manipulated by conditioning optic 74 (e.g. a positive or negative lens or combination of lenses capable of delivering a weakly focused spot that can be further conditioned or manipulated), beam sampling mirror 76, power meter 78, X-Y scanner 80, final focusing lens 82, and servo-controlled stage 84 for positioning workpiece 86, for example a diamond. Control and processing unit 88, which is described in further detail below, is employed for the control of the laser filamentation and cutting system embodiment 70 disclosed herein. Filament position and depth may be controlled by an auto-focus configuration (e.g. using a position-sensing device) that maintains a constant working distance.

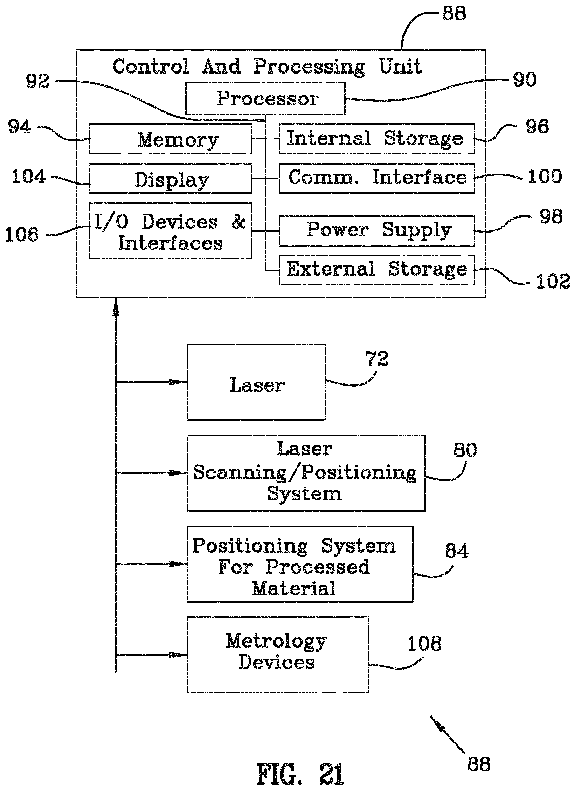

Fig. 21 provides an example implementation of control and processing unit 88, which includes one or more processors 90 (for example, a CPU/microprocessor), bus 92, memory 94, which may include random access memory (RAM) and/or read only memory (ROM), one or more optional internal storage devices 96 (e.g. a hard disk drive, compact disk drive or internal flash memory), a power supply 98, one more optional communications interfaces 100, optional external storage 102, an optional display 104, and various optional input/output devices and/or interfaces 106 (e.g., a receiver, a transmitter, a speaker, an imaging sensor, such as those used in a digital still camera or digital video camera, an output port, a user input device, such as a keyboard, a keypad, a mouse, a position tracked stylus, a position tracked probe, a foot switch, and/or a microphone for capturing speech commands). Control and processing unit 88 is interfaced with one or more of laser system 72, laser scanning/position system 80, the servo-controlled stage 84 (positioning system for the diamond), and one or more metrology devices or systems 108, such as one or more metrology sensors or imaging devices.

Although only one of each component is illustrated in Fig. 21, any number of each component can be included in the control and processing unit 88. For example, a computer typically contains a number of different data storage media. Furthermore, although bus 92 is depicted as a single connection between all of the components, it will be appreciated that the bus 92 may represent one or more circuits, devices or communication channels which link two or more of the components. For example, in personal computers, bus 92 often includes or is a motherboard.

In one embodiment, control and processing unit 88 may be, or include, a general purpose computer or any other hardware equivalents. Control and processing unit 88 may also be implemented as one or more physical devices that are coupled to processor 90 through one of more communications channels or interfaces. For example, control and processing unit 88 can be implemented using application specific integrated circuits (ASICs). Alternatively, control and processing unit 88 can be implemented as a combination of hardware and software, where the software is loaded into the processor from the memory or over a network connection.

Control and processing unit 88 may be programmed with a set of instructions which when executed in the processor 90 causes the system to perform one or more methods described in the disclosure. Control and processing unit 88 may include many more or less components than those shown. Although not illustrated, 3D modeling systems that prepare the entire series of cuts that will be performed on the diamond based on parameters input such as volume efficiency, reflectivity, and division efficiency may also be incorporated into the processing unit.

While some embodiments have been described in the context of fully functioning computers and computer systems, those skilled in the art will appreciate that various embodiments are capable of being distributed as a program product in a variety of forms and are capable of being applied regardless of the particular type of machine or computer readable media used to actually effect the distribution.

A computer readable medium can be used to store software and data which when executed by a data processing system causes the system to perform various methods. The executable software and data can be stored in various places including for example ROM, volatile RAM, non-volatile memory and/or cache. Portions of this software and/or data can be stored in any one of these storage devices. In general, a machine readable medium includes any mechanism that provides (i.e., stores and/or transmits) information in a form accessible by a machine (e.g., a computer, network device, personal digital assistant, manufacturing tool, any device with a set of one or more processors, etc.).

Examples of computer-readable media include but are not limited to recordable and non-recordable type media such as volatile and non-volatile memory devices, read only memory (ROM), random access memory (RAM), flash memory devices, floppy and other removable disks, magnetic disk storage media, optical storage media (e.g., compact discs (CDs), digital versatile disks (DVDs), etc.), among others. The instructions can be embodied in digital and analog communication links for electrical, optical, acoustical or other forms of propagated signals, such as carrier waves, infrared signals, digital signals, and the like.

Some aspects of the present disclosure can be embodied, at least in part, in software. That is, the techniques can be carried out in a computer system or other data processing system in response to its processor, such as a microprocessor, executing sequences of instructions contained in a memory, such as ROM, volatile RAM, non-volatile memory, cache, magnetic and optical disks, or a remote storage device. Further, the instructions can be downloaded into a computing device over a data network in a form of compiled and linked version. Alternatively, the logic to perform the processes as discussed above could be implemented in additional computer and/or machine readable media, such as discrete hardware components as large-scale integrated circuits (LSI's), application-specific integrated circuits (ASIC's), or firmware such as electrically erasable programmable read-only memory (EEPROM's) and field-programmable gate arrays (FPGAs).

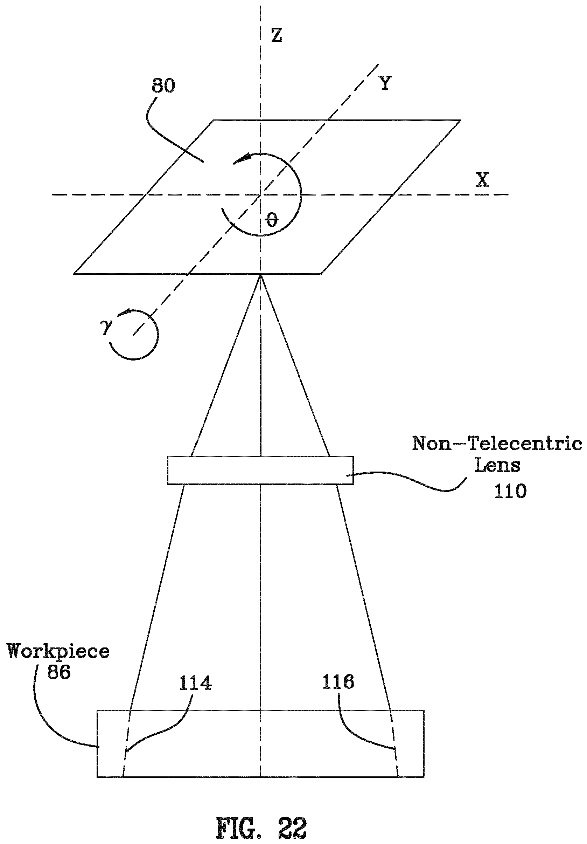

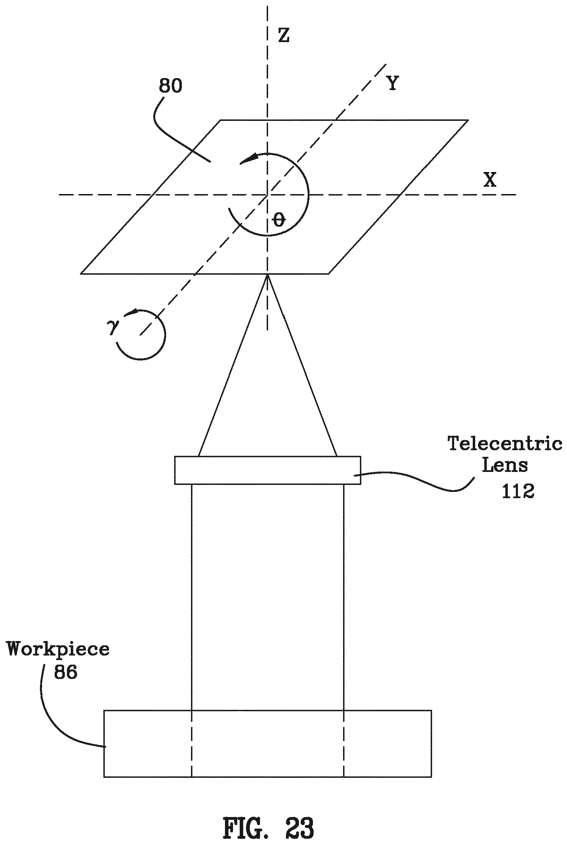

Fig. 22 and 23 illustrate example embodiments showing the ability to control multiple axes via a control of stage of the X-Y scanner 80, using non-telecentric 110 lens (Fig. 22) and telecentric lens 112 (Fig. 23). In the case of a non-telecentric lens 110, angled filament paths can be created by the natural distortion present in a non-field-corrected lens. Rotation about the X (gamma) axis may be performed to provide angled filament modified zones (114, 116) within workpiece 86, for instance, the diamond using normally incident light. It is to be understood that other optical configurations are possible.

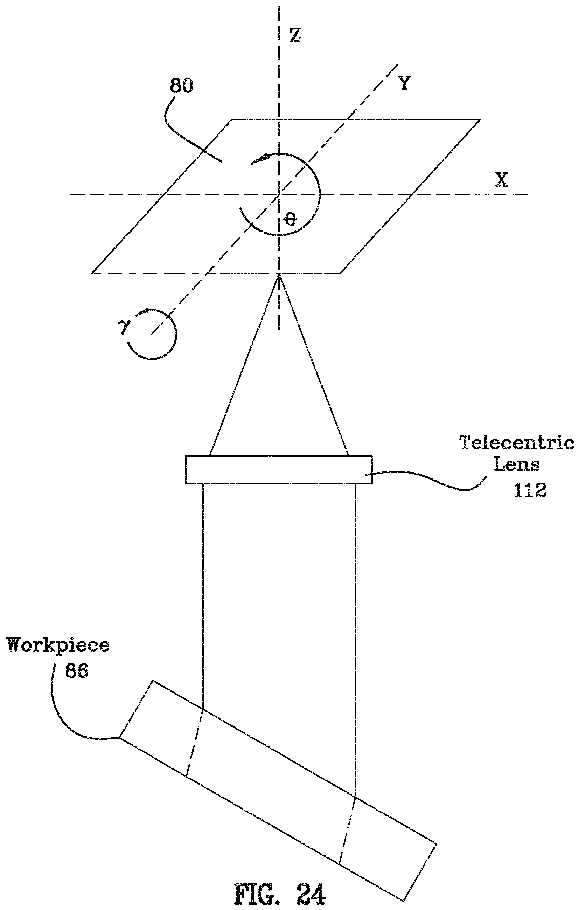

Fig. 24 illustrates an alternative embodiment in which the servo controlled stage 84 (not illustrated) supporting the workpiece 86 is rotated to produce filaments that are angled relative to the workpiece material's surface, for instance the surface of the diamond. This embodiment is configured to present a tilted sample with respect to the beam incidence angle for producing results similar to apparatus embodiments employing a scan lens.

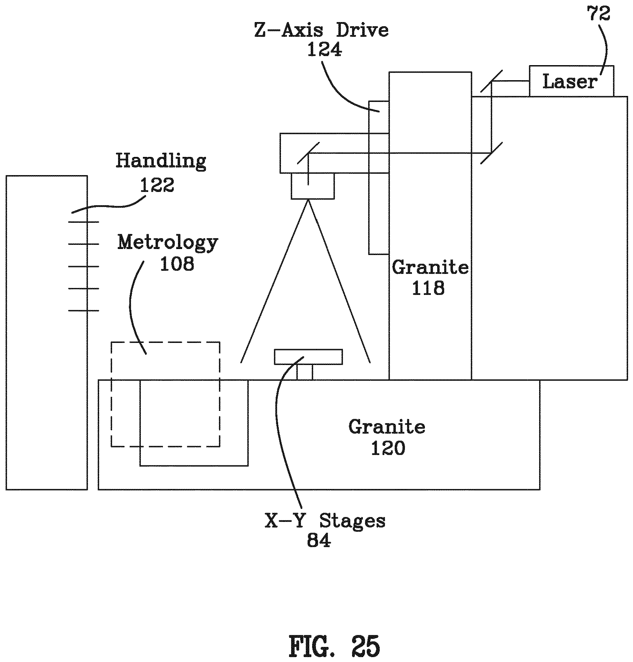

Fig. 25 illustrates the layout of an example laser system suitable for part singulation. Laser 72 is capable of delivering burst pulses, for example, with energies in the range of approximately 5 µJ - 500 µJ, at repetition rates in the approximate range of 2.5- 50 MHz. Increasing the number of pulses in a burst envelope increases the average power and prevents damage to the optics. For instance, as illustrated in Fig. 17-19 multiple subpulses may be used in a burst envelope wherein each pulse has lower individual energy but the total energy per repetition is increased substantially. In this way, the optics are protected from damage due to excessive power levels.

Granite riser 118 is designed to be a reactive mass for dampening mechanical vibrations, as is commonly used in industry. This could be a bridge on which the optics above the stage can translate along one axis, X or Y relative to the stage, and in coordination with it. Granite base 120 provides a reactive mass that may support any or all components of system. In some embodiments, handling apparatus 122 is vibrationally decoupled from the system for stability reasons.

Z axis motor drive 124 is provided for translating the optics (conditioning and focusing and scan optics if needed) in the Z axis relative to the servo controlled X-Y stage 84. This motion can be coordinated with the XY stage 84 and X or Y motion in the overhead granite bridge, and the XY motion of the stage on the granite base 120, which holds the sample material to be processed.

Stage 84 includes, for example, XY and Theta stages with a tilt axis, gamma ("yaw"). The motion of stages 84 is coordinated by a control computing system, for example, to create a part shape desired from a larger mother sheet. Metrology device 108 provides post processing or preprocessing (or both) measurements, for example, for mapping, sizing, and/or checking edges quality post cut.

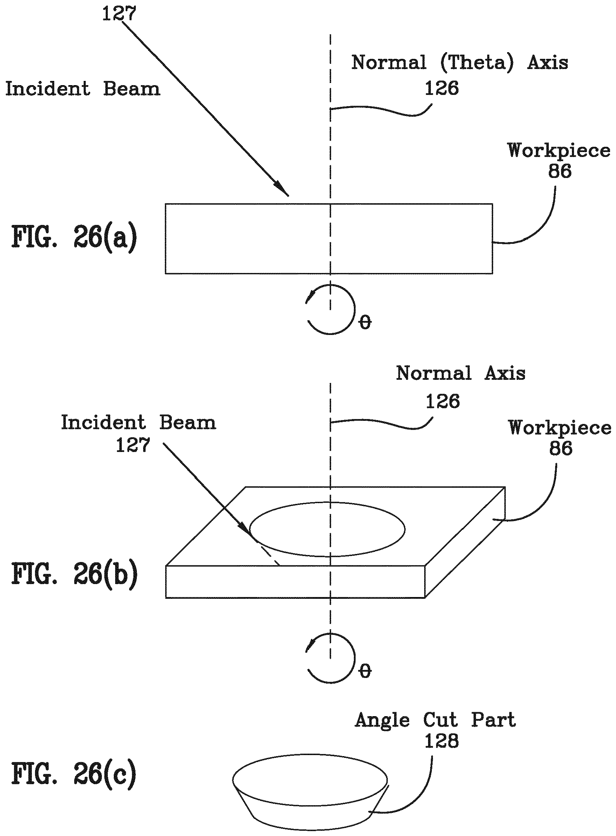

Fig. 26(a)-(d) show the angled cut out approach for making internal features with angled edges requiring no post singulation processing to achieve the desired angular result.

In Fig. 26(a)-(c), the beam track is accomplished via rotation around the theta axis 126 with a fixed incidence angle laser beam 127, equal to the slope desired on the final part edge 128. This non-limiting embodiment enables angled cutting and translation of the rotary stage as an apparatus to support the creation of complex cutouts via filament arrays.

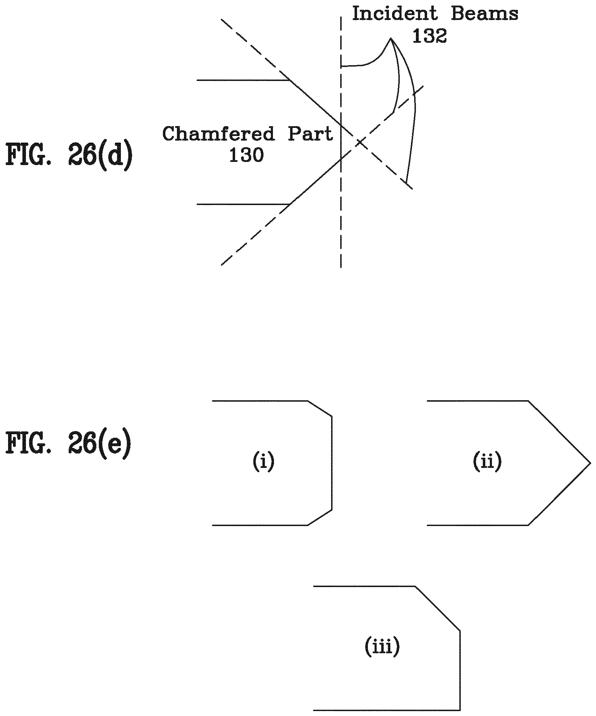

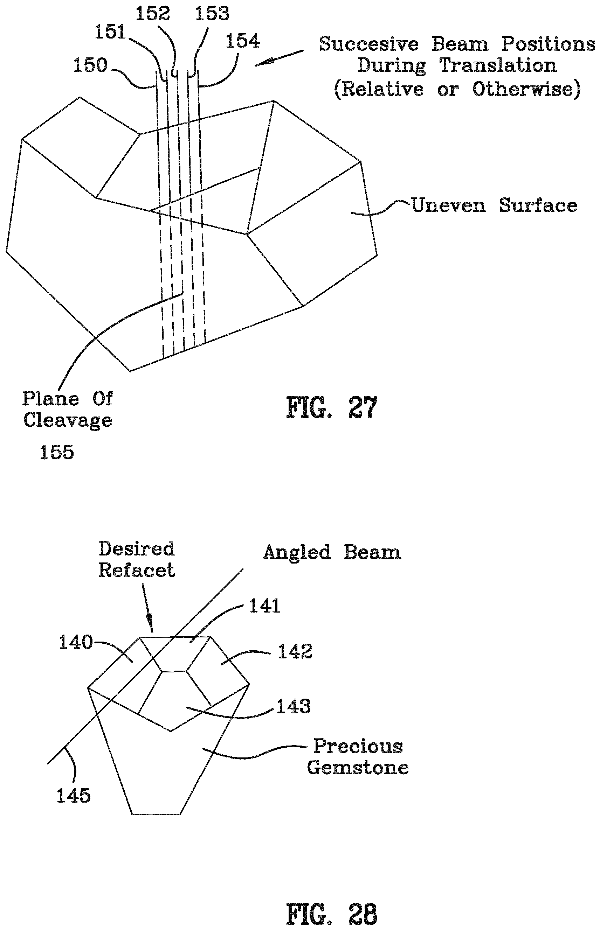

Fig. 26(d) illustrates an example implementation of the formation of a chamfered part 130 via processing with multiple filament forming beams 132 at different angles. It is to be understood that the beam and filament paths can be controlled to form chamfered or bevel edges of various degrees. In the case of concerted (parallel) formation, the beam can be split and directed through optics to achieve multiple beam paths arriving at the target exhibiting angles of incidence other than normal, along with a normally incident beam, such that a three-face edge or chamfer is created. Fig. 28 shows an instance of where a gemstone can be refaceted by an angular beam 145.

As shown in Fig. 27 there not need be a single cut or scribe made in a gemstone to effect the formation of a facet. A series of tightly spaced orifices 150, 151, 152, 153, 154 drilled through the gemstone can be arranged so as to form a plane of cleavage 155.

It is to be understood that chamfers can be created with two or more faces, depending, for example, on the degree of splitting tolerated by the process. Some example configurations are illustrated in Fig. 26(e).

In some embodiments, as described below, the laser processing system can be configured such that one laser (with beam splitting optics) can perform both scribing steps simultaneously, provided that the laser has sufficient power. It has been found, for example, that a laser with an average power of approximately 75 W is sufficient to perform all processing steps simultaneously.

The aforementioned apparatus, with multi-axis rotational and translational control, when utilizing filamentation by burst ultrafast laser pulses to accomplish photoacoustic compression machining may be employed for the purpose of bringing the beam on to the work piece(s) at variable focus positions, non-normal angles of incidence and at variable, recipe controlled positions to create curvilinear zones of filament arrays, for the purpose of cutting out closed-form shapes to create products such as glass HDD platters (from magnetic media covered glass substrate) which is presently not possible using the laser ablative machining techniques currently employed. Those skilled in the art will recognize that all of these axes are not required for all applications and that some applications will benefit from having simpler system constructions. Furthermore, it is to understood that the apparatus shown in but one example implementation of the embodiments of the present disclosure, and that such embodiments may be varied, modified or hybridized for a wide variety of substrates, applications and part presentation schemes without departing from the scope of the present disclosure by the device manufacturers.

Utilizing the above detailed laser machining technology in conjunction with the ability of the computerized laser machining system to precisely focus the filamentation formed in the diamond by the burst of ultrafast laser pulses allows for precise, economical diamond cutting that need not create planar facets. By altering the filament relative to the diamond allows for unlimited full or partial cuts to be made in the diamond. Because of the computerized 3D modeling capability and the precision of cuts, a plethora of surface facets 140,141,142,143 can be cut incorporating both acute and obtuse angles, thereby enhancing the reflective impression of the diamond. Similarly with diamonds used in abrasive/cutting tool bits, complex geometry angles can be cut on the leading edges of the diamonds.

Additionally, many diamonds are completely cleaved into two or more diamonds, such as is the case where a value reducing imperfection resides on a section of the diamond. It may be cut to remove the imperfection and maximize the value of the existing diamond or it may be cut into two working diamonds of different quality levels, depending on the location of the imperfection. Cleaving a plane of the diamond in a specific and precise location in such circumstances results in increased value of the diamond.

The method for machining facets on the face of a diamond proceeds with the following steps:
providing a diamond;
providing a laser beam comprising a burst of laser pulses;
providing a laser beam delivery system capable of focusing the laser beam onto the diamond and to enable relative movement between the laser beam and the diamond;
focusing the laser beam relative to the diamond to form a beam waist at a location that is external to the diamond, wherein the laser pulses incident on the surface of the diamond are focused such that sufficient energy density is maintained within the diamond to form a continuous laser filament there through without causing optical breakdown;
propagating an orifice about said filament that traverses completely through a section of the diamond by photoacoustic compression; and
enabling relative movement between the focused laser beam and the diamond with the laser beam delivery system, so as to move the location of the laser filament creating the orifice in the diamond to make a cut through said diamond.

It is to be noted that at all times the laser need be focused correctly so as to avoid the formation of a plasma channel, for of this occurs there will be a sizeable ejecta mound created on the top and bottom surfaces of the diamond that will require polishing as well as collateral damage to the diamond.
As discussed herein, the face of the cut in the diamond need not be planar as it may be cut in geometric patterns (i.e. conical) by manipulation of the relationship between the laser beam and the glass substrate.

Depending on the desired visual effect of the diamond gemstone, there may not be a continuous filamentation formed from one outer surface of the diamond to another outer surface of the diamond. Rather there may be partial cuts or slices taken from the diamond to enhance it's reflectivity.

### List of reference signs

- 10: target
- 12: spherical focusing lens
- 14: single focus
- 16: machined slot
- 18: oblong orifice
- 20: ejecta mound
- 22: orifice
- 23: non-tapered wall slit
- 24: secondary foci
- 26: distributed focus element assembly
- 30: sacrificial laye
- 32: energy dump distance
- 34: non-aspherical, aberrated lens
- 38: beam spot diameter
- 40: filament diameter
- 42: orifice diameter
- 52: beam spot
- 60: lengthy untapered filament
- 70: laser machining system
- 72: laser
- 74: conditioning optic
- 76: beam sampling mirror
- 78: power meter
- 80: laser scanning/position system
- 82: final focusing lens
- 84: servo-controlled stage
- 86: workpiece
- 88: processing unit
- 90: processor
- 92: bus
- 94: memory
- 96: optional internal storage device
- 98: power supply
- 100: optional communications interfaces
- 102: optional external storages
- 104: optional displays
- 106: various optional input/output devices and/or interfaces
- 108: metrology devices or systems
- 110: non-telecentric lens
- 112: telecentric lens
- 114: angled filament modified zone
- 116: angled filament modified zone
- 118: granite riser
- 120: granite base
- 122: handling apparatus
- 124: Z axis motor drive
- 126: theta axis
- 127: fixed incidence angle laser beam
- 128: final part edge
- 130: chamfered part
- 132: multiple filament forming beams
- 140: surface facet
- 141: surface facet
- 142: surface facet
- 143: surface facet
- 145: angular beam
- 150: tightly spaced orifice
- 151: tightly spaced orifice
- 152: tightly spaced orifice
- 153: tightly spaced orifice
- 154: tightly spaced orifice
- 155: plane of cleavage

## Claims

1. A method of machining a diamond using laser machining, comprising the steps of:
passing laser pulses within a burst pulse envelope from a laser source through a selected distributive focus lens focusing assembly to said diamond;
adjusting the relative distance and or angle of said distributive focus lens focusing assembly in relation to said laser source focusing said laser pulses in a distributed focus configuration **characterized in that** said method further comprises the steps of: creating a principal focal waist and at least one secondary focal waist;
adjusting said principal focal waist or position of said diamond, said diamond includes a surface, such that said principal focal waist resides below or above said diamond and the at least one secondary focal waist is in the diamond;
adjusting said focus of said laser pulses such that a spot of laser fluence on said surface of said diamond is located below or above said principal focal waist, said spot of laser fluence on said surface of said diamond has a diameter;
scanning, three-dimensionally, an image of said diamond before machining said diamond;
inputting said image into a computer and analyzing said image to determine how to cut said diamond to minimize cutting waste;
controlling, using said computer, said laser source operating at a repetition rate or first frequency defining the period of said laser source, and
controlling, using said computer, said laser pulses within said burst pulse envelope which said burst pulse envelope has a time duration much less than said period of said laser source.
applying at least one burst of laser pulses of a suitable wavelength, suitable burst pulse repetition rate and suitable burst pulse energy from said laser source to said diamond through said selected distributive focus lens focusing assembly, said pulse energy or fluence, applied to said diamond at said spot of laser fluence on said surface of said diamond, said total burst pulse energy or fluence applied to said diamond is greater than a critical energy level to initiate and propagate filamentation and photoacoustic compression machining, said filamentation includes a diameter;
adjusting said diameter of said spot of laser fluence on said surface of said diamond to be larger than said diameter of filamentation formed in said transparent target material;
adjusting a fluence level of said secondary focal waists such that said secondary waists are of sufficient intensity and number to ensure propagation of said photoacoustic compressive machining through a desired volume of said diamond; and,
stopping said burst of laser pulses and filamentation when the desired machining has been completed.

2. The method claim 1, **characterized by** a plurality of secondary focal waists in the diamond wherein the primary focal waist and the secondary focal waists are linearly arranged, and wherein the fluence levels of the secondary focal waists are of sufficient intensity and number to ensure propagation of a photoacoustic compressive machining through the desired volume of the diamond or other transparent material target.

3. The method according to anyone of the preceding claims, **characterized in that** said burst of laser pulses includes a number of laser pulses in said burst pulse envelope and is in the range of 1 to 50 pulses.

4. The method according to anyone of the preceding claims, **characterized in that** each pulse of said burst of laser pulses has at least 2 MW of peak power.

5. The method according to anyone of the preceding claims, **characterized by** comprising the steps of:
cutting facets of a diamond;
creating complex geometric surfaces on said diamond; and,
said facets of the diamond need not be planar in configuration.

6. The method according to anyone of the preceding claims, **characterized in that** said facets may be at an acute angle with respect to another surface.

7. The method according to anyone of the preceding claims, **characterized in that** said facets may be at an oblique angle with respect to another surface.

8. The method of any of the preceding claims to machine a substrate selected from the group of sapphire, ruby, tanzanite, emerald, and a metal oxide stone, or other transparent material.

## Patentansprüche

1. Verfahren zur maschinellen Bearbeitung eines Diamanten mittels Laserbearbeitung, folgende Schritte umfassend:
Abgeben von Laserpulsen innerhalb einer Hüllkurve eines Burstpulses von einer Laserquelle durch eine ausgewählte Fokussiereinrichtung mit Verteilerfokus-Linse an den Diamanten;
Einstellen der relativen Entfernung und/oder des Winkels der Fokussiereinrichtung mit Verteilerfokus-Linse zur Laserquelle, die die Laserpulse in verteilter Fokuskonfiguration fokussiert, **dadurch gekennzeichnet, dass** das Verfahren des Weiteren folgende Schritte umfasst:
Erzeugen einer Hauptfokustaille und mindestens einer sekundären Fokustaille;
Einstellen der Hauptfokustaille oder Position des Diamanten, wobei der Diamant eine Oberfläche derart aufweist, dass die Hauptfokustaille unter oder über dem Diamanten liegt und die mindestens eine sekundäre Fokustaille im Diamanten liegt;
Einstellen des Fokus der Laserpulse derart, dass ein Fleck der Laserstrahlungsdichte auf der Oberfläche des Diamanten unter oder über der Hauptfokustaille liegt, wobei der Fleck der Laserstrahlungsdichte auf der Oberfläche des Diamanten einen Durchmesser hat;
dreidimensionales Scannen eines Bildes des Diamanten vor dessen maschineller Bearbeitung;
Eingeben dieses Bildes in einen Computer und Analysieren des Bildes, um zu ermitteln, wie der Diamant unter minimalem Verschnitt geschnitten werden kann;
Ansteuern der Laserquelle mittels des Computers, so dass diese mit einer Wiederholungsrate oder ersten Frequenz arbeitet, die die Periode der Laserquelle definiert, und
Steuern, mittels des Computers, der Laserpulse innerhalb der Hüllkurve des Burstpulses,
wobei diese Hüllkurve des Burstpulses eine weitaus geringere Zeitdauer hat als die Periode der Laserquelle,
Anlegen mindestens eines Bursts von Laserpulsen mit geeigneter Wellenlänge, geeigneter Burstpulswiederholungsrate und geeigneter Burstpulsenergie von der Laserquelle an den Diamanten über die ausgewählte Fokussiereinrichtung mit Verteilerfokus-Linse, wobei die Pulsenergie oder Pulsstrahlungsdichte an den Diamanten an dem Fleck der Laserstrahlungsdichte an die Oberfläche des Diamanten angelegt wird, wobei die an den Diamanten angelegte Gesamt-Burstpulsenergie oder-strahfungsdichte größer ist als ein kritisches Energieniveau zur Initiierung und Ausbreitung einer Filamentierung und
photoakustischen Kompressionsbearbeitung, wobei die Filamentierung einen Durchmesser beinhaltet;
Einstellen des Durchmessers des Flecks der Laserstrahlungsdichte an der Diamantoberfläche, so dass diese größer ist als der Durchmesser der im transparenten Zielmaterial erzeugten Filamentierung;
Einstellen eines Strahlungsdichteniveaus der sekundären Fokustaillen, so dass die sekundären Fokustaillen von ausreichender Intensität und Anzahl sind, um eine Ausbreitung der photoakustischen Kompressionsbearbeitung durch ein gewünschtes Volumen des Diamanten hindurch sicherzustellen; und
Anhalten des Bursts von Laserpulsen und der Filamentierung nach Beendigung der gewünschten Bearbeitung.

2. Verfahren nach Anspruch 1, **gekennzeichnet durch** eine Vielzahl sekundärer Fokustaillen im Diamanten, wobei die primäre Fokustaille und die sekundäre Fokustaille linear angeordnet sind, und wobei die Strahlungsdichtepegel der sekundären Fokustaillen von ausreichender Intensität und Anzahl sind, um eine Ausbreitung einer photoakustischen Kompressionsbearbeitung **durch** das gewünschte Volumen des Diamanten oder eines anderen Ziels aus transparentem Material hindurch zu gewährleisten.

3. Verfahren nach einem der voranstehenden Ansprüche, **dadurch gekennzeichnet, dass** der Burst von Laserpulsen eine Anzahl von Laserpulsen in der Hüllkurve des Burstpulses beinhaltet und im Bereich von 1 bis 50 Pulsen liegt.

4. Verfahren nach einem der voranstehenden Ansprüche, **dadurch gekennzeichnet, dass** jeder Puls des Bursts von Laserpulsen eine Leistungsspitze von mindestens 2 MW hat.

5. Verfahren nach einem der voranstehenden Ansprüche, gekenntzeichnet durch folgende Schritte:
Schneiden von Diamantfacetten;
Bilden komplexer geometrischer Flächen auf dem Diamanten; und
wobei die Facetten des Diamanten keine ebene Konfiguration haben müssen.

6. Verfahren nach einem der voranstehenden Ansprüche, **dadurch gekennzeichnet, dass** die Facetten in einem spitzen Winkel zu einer anderen Fläche verlaufen können.

7. Verfahren nach einem der voranstehenden Ansprüche, **dadurch gekennzeichnet, dass** die Facetten in einem schiefen Winkel zu einer anderen Fläche verlaufen können.

8. Verfahren nach einem der voranstehenden Ansprüche zur maschinellen Bearbeitung eines Substrats, das aus der Gruppe bestehend aus Saphir, Rubin, Tansanit, Smaragd und einem Metalloxidstein oder einem anderen transparenten Material ausgewählt ist.

## Revendications

1. Procédé d'usinage d'un diamant en utilisant un usinage au laser, comprenant les étapes :
de passage d'impulsions laser dans une enveloppe d'impulsions de salve d'une source laser à travers un ensemble de focalisation à lentille de focalisation distributive sélectionné jusqu'audit diamant ;
d'ajustement de la distance et/ou de l'angle relatifs dudit ensemble de focalisation à lentille de focalisation distributive par rapport à ladite source laser en focalisant lesdites impulsions laser en une configuration de focalisation distribuée,
**caractérisé en ce que** ledit procédé comprend en outre les étapes :
de création d'un resserrement focal principal et d'au moins un resserrement focal secondaire ;
d'ajustement dudit resserrement focal principal ou de la position dudit diamant, ledit diamant comprenant une surface, de sorte que ledit resserrement focal principal se trouve au-dessous ou au-dessus dudit diamant et que ledit au moins un resserrement focal secondaire soit dans le diamant ;
d'ajustement de ladite focalisation desdites impulsions laser de sorte qu'un point de fluence de laser sur ladite surface dudit diamant soit situé au-dessous ou au-dessus dudit resserrement focal principal, ledit point de fluence de laser sur ladite surface dudit diamant a un diamètre ;
de balayage, de manière tridimensionnelle, d'une image dudit diamant avant l'usinage dudit diamant ;
d'entrée de ladite image dans un ordinateur et d'analyse de ladite image pour déterminer comment usiner ledit diamant pour réduire à un minimum les déchets d'usinage ;
de commande, en utilisant ledit ordinateur, de ladite source laser fonctionnant à une fréquence de répétition ou à première fréquence définissant la période de ladite source laser,
et
de commande, en utilisant ledit ordinateur, desdites impulsions laser dans ladite enveloppe d'impulsions de salve, laquelle dite enveloppe d'impulsions de salve a une durée très inférieure à ladite période de ladite source laser,
d'application d'au moins une salve d'impulsions laser d'une longueur d'onde appropriée, d'une fréquence de répétition d'impulsions de salve appropriée et d'une énergie d'impulsions de salve appropriée de ladite source laser audit diamant à travers ledit ensemble de focalisation à lentille de focalisation distributive sélectionné, ladite énergie d'impulsion ou fluence appliquée audit diamant au niveau dudit point de fluence de laser sur ladite surface dudit diamant, ladite énergie d'impulsion de salve ou fluence totale appliquée audit diamant est supérieure à un niveau d'énergie critique pour lancer et propager une filamentation et un usinage par compression photoacoustique, ladite filamentation comprenant un diamètre ;
d'ajustement dudit diamètre dudit point de fluence de laser sur ladite surface dudit diamant pour qu'il soit supérieur audit diamètre de filamentation formé dans ledit matériau cible transparent ;
d'ajustement d'un niveau de fluence desdits resserrements focaux secondaires de sorte que lesdits resserrements secondaires soient d'une intensité et en un nombre suffisants pour garantir la propagation dudit usinage par compression photoacoustique à travers un volume souhaité dudit diamant ; et
d'arrêt de ladite salve d'impulsions laser et de la filamentation lorsque l'usinage souhaité est achevé.

2. Procédé selon la revendication 1, **caractérisé par** une pluralité de resserrements focaux secondaires dans le diamant, dans lequel le resserrement focal principal et les resserrements focaux secondaires sont agencés linéairement, et dans lequel les niveaux de fluence des resserrements focaux secondaires sont d'une intensité et en un nombre suffisants pour garantir la propagation d'un usinage par compression photoacoustique à travers le volume souhaité du diamant ou d'un autre matériau cible transparent.

3. Procédé selon l'une quelconque des revendications précédentes, **caractérisé en ce que** ladite salve d'impulsions laser comprend un certain nombre d'impulsions laser dans ladite enveloppe d'impulsions de salve et est dans la plage de 1 à 50 impulsions.

4. Procédé selon l'une quelconque des revendications précédentes, **caractérisé en ce que** chaque impulsion de ladite salve d'impulsions laser a une puissance de crête d'au moins 2 MW.

5. Procédé selon l'une quelconque des revendications précédentes, **caractérisé en ce qu'**il comprend les étapes :
d'usinage des facettes d'un diamant ;
de création de surfaces géométriques complexes sur ledit diamant ; et
lesdites facettes du diamant ne doivent pas avoir une configuration plane.

6. Procédé selon l'une quelconque des revendications précédentes, **caractérisé en ce que** lesdites facettes peuvent former un angle aigu avec une autre surface.

7. Procédé selon l'une quelconque des revendications précédentes, **caractérisé en ce que** lesdites facettes peuvent former un angle oblique avec une autre surface.

8. Procédé selon l'une quelconque des revendications précédentes pour usiner un substrat sélectionné dans le groupe comprenant le saphir, le rubis, la tanzanite, l'émeraude, et une pierre d'oxyde métallique, ou un autre matériau transparent.
